# EUROPEAN PATENT APPLICATION

(11) **EP 4 848 373 A1**
(43) Date of publication of application: **02.12.2026**
(21) Application number: 24920675.6
(22) Date of filing: 29.08.2024
(51) Int. Cl.: H01M 4/58, H01M 4/36, H01M 4/525, H01M 4/583, H01M 10/0562, H01M 10/0585, H01M 10/0565, H01M 4/02

(54) **POSITIVE ELECTRODE AND ALL-SOLID-STATE SECONDARY BATTERY COMPRISING SAME**

(30) Priority: 24.01.2024 KR 20240011000
(71) Applicant: SAMSUNG SDI CO., LTD., Yongin-si, Gyeonggi-do 17084 (KR)
(72) Inventor: SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); LIM, Hyung Sub, Yongin-Si Gyeonggi-do 17084 (KR); PARK, Tae Hyun, Yongin-Si Gyeonggi-do 17084 (KR); LEE, Ji Eun, Yongin-Si Gyeonggi-do 17084 (KR); YUN, Jong Hyuk, Yongin-Si Gyeonggi-do 17084 (KR)
(74) Representative: Michalski Hüttermann & Partner mbB
(86) International application number: PCT/KR2024/012934
(87) International publication number: WO 2025/159259

(57) **Abstract**

Disclosed are a positive electrode and an all-solid-state secondary battery including the same, the positive electrode including: a positive electrode current collector; a positive electrode active material layer; and an interlayer between the positive electrode current collector and the positive electrode active material layer, wherein the interlayer includes an oxide-based positive electrode active material and a first sulfide-based solid electrolyte, the positive electrode active material layer includes a sulfide-based composite positive electrode active material and a second sulfide-based solid electrolyte, the composite positive electrode active material includes a composite of Li₂S, a first ionic compound, and a first carbon-based material, and the oxide-based positive electrode active material has an olivine structure or a spinel structure.

## Description

### Technical Field

The present disclosure relates to a positive electrode and an all-solid-secondary battery including the same.

### Background Art

Recently, the development of batteries with high energy density and high safety has been actively carried out in response to industrial demands. For example, lithium batteries are used in a wide range of applications, including information devices, communication devices, automobiles, and the like. Automobiles are related to life, and thus safety is also considered important.

Lithium batteries using liquid electrolytes may have a high risk of fire and/or explosion in the event of a short circuit. All-solid-secondary batteries using solid electrolytes instead of liquid electrolytes have been proposed. A solid electrolyte has a lower risk of ignition compared to a liquid electrolyte.

### Disclosure of Invention

### Technical Problem

One aspect is to provide a positive electrode that simultaneously provides improved charge/discharge characteristics and thermal stability by introducing an interlayer including an oxide-based positive electrode active material between a positive electrode current collector and a positive electrode active material layer including a sulfide-based positive electrode active material.

Another aspect is to provide an all-solid-secondary battery including the positive electrode.

### Solution to Problem

According to an embodiment,
a positive electrode includes: a positive electrode current collector; a positive electrode active material layer; and
an interlayer between the positive electrode current collector and the positive electrode active material layer,
wherein the interlayer includes an oxide-based positive electrode active material and a first sulfide-based solid electrolyte,
the positive electrode active material layer includes a sulfide-based composite positive electrode active material and a second sulfide-based solid electrolyte,
the composite positive electrode active material includes a composite of Li₂S, a first ionic compound, and a first carbon-based material,
the oxide-based positive electrode active material has an olivine structure or a spinel structure.

According to another embodiment,
an all-solid-state secondary battery includes: the positive electrode; a negative electrode; and
an electrolyte layer arranged between the positive electrode and the negative electrode,
wherein the negative electrode includes a negative electrode current collector and a first negative electrode active material layer arranged on one side of the negative electrode current collector.

### Advantageous Effects of Invention

According to one aspect, by introducing an interlayer including an oxide-based positive electrode active material between a positive electrode active material layer including a sulfide-based positive electrode active material and a positive electrode current collector, it is possible to provide a positive electrode and an all-solid-state secondary battery having both improved charge/discharge characteristics and thermal stability.

### Brief Description of Drawings

FIG. 1 is a cross-sectional view of an all-solid-state secondary battery according to an embodiment.
FIG. 2 is a cross-sectional view of an all-solid-state secondary battery according to an embodiment.
FIG. 3 is a cross-sectional view of an all-solid-state secondary battery according to an embodiment.
FIG. 4 is a cross-sectional view of an all-solid-state secondary battery according to an embodiment.
FIG. 5 is a cross-sectional view of an all-solid-state secondary battery according to an embodiment.
FIG. 6 is a cross-sectional view of an all-solid-state secondary battery according to an embodiment.
FIG. 7 is a cross-sectional view of an all-solid-state secondary battery according to an embodiment.

### Best Mode for Carrying out the Invention

Unless otherwise defined, all terms (including technical and scientific terms) used in the present disclosure have the same meaning as commonly understood by those skilled in the art to which the present disclosure belongs. In addition, terms as defined in commonly used dictionaries should be interpreted as having meanings consistent with their meanings in the context of the related art and the present disclosure, and should not be interpreted in an idealized or overly formal sense.

Exemplary embodiments are described in the present disclosure with reference to cross-sectional views that are schematic diagrams of idealized embodiments. As such, variations from the illustrated shape should be expected as a result of, for example, manufacturing techniques and/or tolerances. Thus, embodiments described in the present disclosure should not be construed as being limited to the specific shapes of regions illustrated in the present disclosure, but should include deviations in shapes that result from, for example, manufacturing. For example, regions illustrated or described as flat regions may generally have rough and/or non-linear characteristics. Moreover, angles illustrated as sharp may be rounded. Therefore, regions illustrated in drawings are schematic in nature, and shapes thereof are not intended to illustrate the precise shape of the regions and are not intended to limit the scope of the claims.

The present inventive idea may be embodied in many different forms and should not be construed as being limited to the implementations described in the present disclosure. These embodiments are provided so that the present disclosure will be thorough and complete, and are provided to fully convey the scope of the present inventive idea to those skilled in the art. Like reference numerals designate like elements.

It will be understood that when an element is referred to as being "on" another element, it may be directly on top of the other element, or another element may be interposed therebetween. In contrast, when an element is referred to as being "directly on" another element, there is no intervening element therebetween.

Although the terms "first," "second," "third," and the like may be used in the present disclosure to describe various components, components, regions, layers, and/or regions, these components, components, regions, layers, and/or regions should not be limited by these terms. These terms are only used to distinguish one element, component, region, layer or region from another element, component, region, layer or region. Thus, a first element, ingredient, region, layer, or area described below could be termed a second element, ingredient, region, layer, or area without departing from the teachings of the present disclosure.

Terms used in the present disclosure are for the purpose of describing specific embodiments, and are not intended to limit the present inventive idea. The singular forms used herein are intended to include the plural forms including "at least one" unless the content clearly indicates otherwise. "At least one" should not be interpreted as being limited to the singular. As used in the present disclosure, the term "and/or" includes any and all combinations of one or more of the listed items. The terms "includes" and/or "including" as used in the detailed description specify the presence of specified features, regions, integers, steps, operations, components, elements, and/or ingredients, and do not exclude the presence or addition of one or more other features, regions, integers, steps, operations, components, elements, and/or groups thereof.

Spatially relative terms, such as "beneath," "below," "lower," "top," "above;" "upper," etc., may be used to facilitate describing the relationship of one component or feature to another component or feature. It will be understood that spatially relative terms are intended to include different orientations of a device in use or operation in addition to the orientations shown in drawings. For example, when a device in drawings is turned over, elements described as "beneath" or "bottom" other elements or features will be oriented "above" the other elements or features. Thus, the exemplary term "below" may encompass both directions of up and down. The device may be otherwise oriented (rotated 90° or rotated in other directions) and the spatially relative descriptors used herein interpreted accordingly.

The "Group" means a group of the Periodic Table of Elements according to the 1 to 18 grouping system of the International Union of Pure and Applied Chemistry ("IUPAC").

In the present disclosure, "particle diameter" refers to an average diameter when a particle is spherical, and refers to an average major axis length when a particle is non-spherical. The particle diameter may be measured by using a particle size analyzer (PSA). The "particle diameter" refers to, for example, an average particle diameter. The "average particle diameter" may be, for example, a median particle diameter D50.

For example, a median particle diameter D50 refers to a particle size corresponding to a 50 % cumulative volume calculated from particles having a small particle size in a particle size distribution measured by, for example, a laser diffraction method.

For example, a median particle diameter D90 refers to a particle size corresponding to a 90 % cumulative volume calculated from particles having a small particle size in a particle size distribution measured by, for example, a laser diffraction method.

For example, a median particle diameter D10 refers to a particle size corresponding to a 10 % cumulative volume calculated from particles having a small particle size in a particle size distribution measured by, for example, a laser diffraction method.

In the present disclosure, a "weight average molecular weight" of a polymer may be measured by using, for example, gel permeation chromatography (GPC), and is a value relative to a polystyrene standard sample.

In the present disclosure, the term "metal" may include both a metal and a metalloid, such as silicon and germanium, in an elemental state or an ionic state.

In the present disclosure, the term "alloy" may refer to a mixture of two or more metals.

The term "electrode active material" as used herein refers to an electrode material capable of undergoing lithiation and delithiation.

In the present disclosure, the term "positive electrode active material" may refer to a positive electrode material capable of undergoing lithiation and delithiation.

In the present disclosure, the term "negative electrode active material" may refer to a negative electrode material capable of undergoing lithiation and delithiation.

The terms "lithiation" and "lithiate" as used herein refer to a process of adding lithium to an electrode active material.

The terms "delithiation" and "delithiate" as used herein refer to a process of removing lithium from an electrode active material.

In the present disclosure, the terms "charging" and "charge" may refer to a process of providing electrochemical energy to a battery.

In the present disclosure, the terms "discharging" and "discharge" may refer to a process of eliminating electrochemical energy from a battery.

In the present disclosure, the terms "positive electrode" and "cathode" may refer to an electrode in which electrochemical reduction and lithiation occur during a discharge process.

In the present disclosure, the terms "negative electrode" and "anode" may refer to an electrode in which electrochemical oxidation and delithiation occur during a discharge process.

In the present disclosure, an "ionic compound" is a chemical compound consisting of ions held together by electrostatic forces referred to as ionic bonds.

While particular embodiments have been described, currently unforeseen or unforeseeable alternatives, modifications, variations, improvements, and substantial equivalents may occur to applicants or those skilled in the art. Accordingly, the appended claims as filed and as may be amended are intended to embrace all such alternatives, modifications, variations, improvements and substantial equivalents.

Hereinafter, a positive electrode according to embodiments and an all-solid secondary battery including the same will be described in more detail.

### [Positive Electrode]

A positive electrode according to an embodiment includes: a positive electrode current collector; a positive electrode active material layer; and an interlayer between the positive electrode current collector and the positive electrode active material layer. The interlayer includes an oxide-based positive electrode active material and a first sulfide-based solid electrolyte. The positive electrode active material layer includes a sulfide-based composite positive electrode active material and a second sulfide-based solid electrolyte. The sulfide-based composite positive electrode active material includes a composite of Li₂S, a first ionic compound, and a first carbon-based material. The oxide-based positive electrode active material has an olivine structure or a spinel structure.

The thermal stability of the positive electrode may be improved by arranging the interlayer including the oxide-based positive electrode active material between the positive electrode current collector and the positive electrode active material layer including the sulfide-based composite positive electrode active material. As the positive electrode includes the interlayer, an all-solid-state secondary battery including the positive electrode may more effectively suppress thermal runaway by reducing the amount of heat generated in the event of a short circuit that occurs due to an internal short circuit, external impact, or the like. Oxides are structurally more stable than sulfides, and thus may serve to further improve the thermal stability and structural stability of the positive electrode including the sulfide-based composite positive electrode active material.

By introducing the interlayer, ignition due to overcurrent or the like may be blocked by an increase in resistance of the interlayer in an all-solid-state secondary battery charged beyond its designed capacity. Accordingly, the thermal stability of the all-solid-state secondary battery may be improved.

By introducing an interlayer, the adhesion between the positive electrode active material layer and the positive electrode current collector may be further improved. High pressure is required to arrange a positive electrode active material layer prepared from a dry positive electrode film on the positive electrode current collector, but due to the introduction of the interlayer that acts as an adhesive layer, the positive electrode active material layer may be arranged on the positive electrode current collector at a relatively low pressure. In this regard, the generation of defects such as cracks in the positive electrode current collector caused by high pressure during the manufacture of the positive electrode may be suppressed.

By introducing the interlayer, effective contact areas between the positive electrode active material layer and the interlayer and effective contact areas between the positive electrode current collector and the interlayer may be increased. By introducing the interlayer, effective contact areas between the positive electrode active material layer and the positive electrode current collector may be substantially further increased. By introducing the interlayer, the interfacial resistance between the positive electrode active material layer and the positive electrode current collector may be reduced. Accordingly, an increase in the internal resistance of an all-solid-state secondary battery including the positive electrode may be suppressed. As a result, the charge/discharge characteristics of the all-solid-state secondary battery, for example, specific capacity, high-rate characteristics, and lifespan characteristics, may be further improved.

As the interlayer additionally includes the sulfide-based solid electrolyte, an increase in the interfacial resistance between the positive electrode active material layer and the interlayer and/or an increase in the interfacial resistance between the interlayer and the positive electrode current collector may be more effectively suppressed. As the interlayer additionally includes the sulfide-based solid electrolyte, the lifespan characteristics of the all-solid-state secondary battery including the interlayer may be further improved. As the content of the sulfide-based solid electrolyte included in the interlayer increases, the high-rate characteristics of the all-solid-state secondary battery may be improved. If the content of the sulfide-based solid electrolyte included in the interlayer increases excessively, the charge/discharge characteristics may deteriorate due to a decrease in the electronic conductivity.

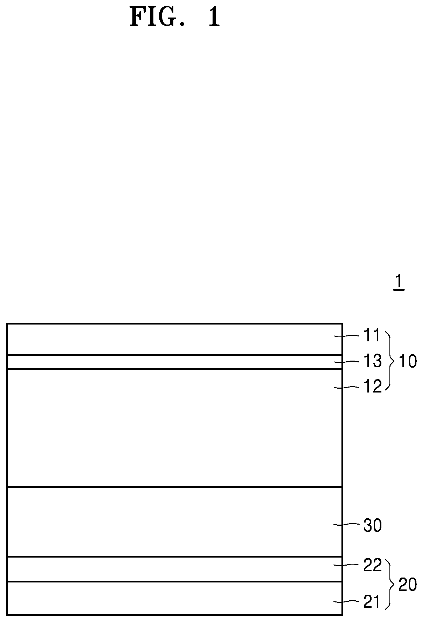

Referring to FIGS. 1 to 7, the positive electrode 10 includes: a positive electrode current collector 11; a positive electrode active material layer 12; and an interlayer 13 between the positive electrode current collector 11 and the positive electrode active material layer 12.

### [Interlayer]

Referring to FIGS. 1 to 7, the positive electrode 10 includes an interlayer 13 between the positive electrode current collector 11 and the positive electrode active material layer 12.

### [Interlayer: Oxide-based positive electrode active material]

The interlayer 13 includes an oxide-based positive electrode active material and a first sulfide-based solid electrolyte.

The oxide-based positive electrode active material has an olivine crystal structure or a spinel crystal structure. The oxide-based positive electrode active material having an olivine crystal structure or a spinel crystal structure may have improved thermal stability and structural stability compared to an oxide-based positive electrode active material having a layered crystal structure. The oxide-based positive electrode active material having an olivine crystal structure suppresses, for example, the release of oxygen even at high temperatures. Therefore, the oxide-based positive electrode active material having an olivine crystal structure may more effectively suppress thermal runaway and/or ignition caused by a short circuit or the like. A manganese-containing oxide-based positive electrode active material having a spinel crystal structure exhibits high direct current resistance when a short circuit occurs, thereby preventing overcurrent within an all-solid-state secondary battery. As a result, thermal runaway of the all-solid-state secondary battery may be prevented.

The oxide-based positive electrode active material may include, for example, a lithium transition metal oxide. The lithium transition metal oxide may include a lithium transition metal phosphate oxide. The oxide-based positive electrode active material may include, for example, lithium transition metal oxide secondary particles. The lithium transition metal oxide secondary particles include, for example, a plurality of lithium transition metal oxide primary particles and a carbon-based material. The plurality of lithium transition metal oxide primary particles and the carbon-based material may be agglomerated to form lithium transition metal oxide secondary particles. The particle diameter of the lithium transition metal oxide primary particles may be, for example, less than 1 µm, 500 nm or less, 300 nm or less, 200 nm or less, or 100 nm or less. The particle diameter of the lithium transition metal oxide primary particles may be, for example, 10 nm to 900 nm, 10 nm to 500 nm, 10 nm to 300 nm, 10 nm to 200 nm, or 10 nm to 100 nm. As the particle diameter of the lithium transition metal oxide primary particles is within the ranges above, the ionic conductivity and/or electronic conductivity of the lithium transition metal oxide secondary particles formed by agglomeration of the lithium transition metal oxide primary particles and the carbon-based material may be further improved. As a result, the charge/discharge characteristics of the all-solid-state secondary battery may be further improved. The particle diameter of the lithium transition metal oxide secondary particles may be, for example, 10 µm or less, 5 µm or less, 3 µm or less, or 2 µm or less. The particle diameter of the lithium transition metal oxide secondary particles may be, for example, 0.5 to 10 µm, 0.5 to 5 µm, 0.5 to 3 µm, or 0.5 to 2 µm. As the particle diameter of the lithium transition metal oxide secondary particles is within the ranges above, the internal resistance of the positive electrode including the interlayer including the lithium transition metal oxide secondary particles may be further reduced. As a result, the charge/discharge characteristics of the all-solid-state secondary battery may be further improved.

The oxide-based positive electrode active material may include, for example, a lithium transition metal oxide selected from lithium transition metal oxides represented by Formulae 1 to 4:

Formula 1 LiₐM1ₓM2_{y}PO_{4-b}X_{b}

wherein, in Formula 1, 0.90≤a≤1.1, 0≤x≤0.9, 0≤y≤0.5, 0.9<x+y<1.1, and 0≤b≤2,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof,
X is O, F, S, P, or a combination thereof,

   Formula 2 LiₐM3_{z}PO₄

   wherein, in Formula 2, 0.90≤a≤1.1 and 0.9≤z≤1.1,
   M3 is chromium (Cr), manganese (Mn), iron (Fe), cobalt (Co), nickel (Ni), copper (Cu), zirconium (Zr), or a combination thereof,

      Formula 3 LiaMn2-xM4xO4-bXb

      Formula 4 LiaCo2-xM5xO4-bXb

      wherein, in Formulae 3 and 4, 0.90≤a≤1.1, 0≤x≤0.9, 0≤b≤2, and
      M4 and M5 are each independently magnesium (Mg), calcium (Ca), strontium (Sr), barium (Ba), titanium (Ti), zirconium (Zr), niobium (Nb), molybdenum (Mo), tungsten (W), aluminum (Al), silicon (Si), nickel (Ni), manganese (Mn), chromium (Cr), iron (Fe), magnesium (Mg), scandium (Sc), vanadium (V), scandium (Sc), yttrium (Y), or a combination thereof, and
      X is O, F, S, P, or a combination thereof.

The content of the oxide-based positive electrode active material included in the interlayer 13 may be, for example, 80 wt% or more, 85 wt% or more, or 90 wt% or more, of the total weight of the interlayer 13. The content of the oxide-based positive electrode active material included in the interlayer 13 may be, for example, 80 wt% to 99 wt%, 85 wt% to 99 wt%, 90 wt% to 99 wt%, 90 to 97 wt%, or 90 to 95 wt%, of the total weight of the interlayer 13. As the interlayer 13 includes the oxide-based positive electrode active material within the ranges above, the positive electrode 10 and an all-solid-state secondary battery 1 may provide excellent thermal stability and excellent charge/discharge characteristics at the same time. If the content of the oxide-based positive electrode active material is too low, the heat-blocking effect of the interlayer 13 may deteriorate. If the content of the oxide-based positive electrode active material is too high, the interfacial resistance of the interlayer 13 may excessively increase.

### [Interlayer: First sulfide-based solid electrolyte]

The interlayer 13 includes a first sulfide-based solid electrolyte.

The first sulfide-based solid electrolyte is, for example, one or more selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is one of Ge, Zn, or Ga), Li₂S-GeS₂, Li₂S-SiS₂-Li₃PO₄, Li₂S-SiS₂-LiₚMO_{q} (where p and q are positive numbers and M is one of P, Si, Ge, B, Al, Ga, or In), Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). The first sulfide-based solid electrolyte is produced by, for example, processing starting materials, such as Li₂S and P₂S₅, by a melt-quenching method or a mechanical milling method. In addition, following such processing, a heat treatment may be performed. The first sulfide-based solid electrolyte may be amorphous, crystalline, or a mixture thereof. In addition, the first sulfide-based solid electrolyte may be, for example, one that includes, as constituent elements, at least sulfur (S), phosphorus (P), and lithium (Li) among the aforementioned sulfide-based solid electrolyte materials. For example, the first sulfide-based solid electrolyte may be a material containing Li₂S-P₂S₅. If a material containing Li₂S-P₂S₅ is used as the first sulfide-based solid electrolyte material, the mixing molar ratio of Li₂S to P₂S₅ (Li₂S : P₂S₅) is, for example, in a range of 20:80 to 90:10, 25:75 to 90:10, 30:70 to 70:30, or 40:60 to 60:40.

The first sulfide-based solid electrolyte may include, for example, an argyrodite-type solid electrolyte represented by Formula 5:

Formula 5 Li⁺₁₂₋ₙ₋ₓAⁿ⁺X²⁻₆₋ₓY⁻ₓ

wherein, in the formula above, A is P, As, Ge, Ga, Sb, Si, Sn, Al, In, Ti, V, Nb, or Ta, X is S, Se, or Te, Y is Cl, Br, I, F, CN, OCN, SCN, or N₃, 1≤n≤5, and 0≤x≤2. The first sulfide-based solid electrolyte may be, for example, an argyrodite-type compound including at least one selected from Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). The first sulfide-based solid electrolyte may be, for example, an argyrodite-type compound including at least one selected from Li₆PS₅Cl, Li₆PS₅Br, and Li₆PS₅I.

The density of the argyrodite-type solid electrolyte may be 1.5 to 2.0 g/cc. As the argyrodite-type solid electrolyte has a density of 1.5 g/cc or more, the internal resistance of the all-solid-state secondary battery is reduced, and the penetration of an electrolyte layer by Li may be effectively suppressed.

The positive electrode active material layer 12 includes a second sulfide-based solid electrolyte. The second sulfide-based solid electrolyte may be selected from the aforementioned first sulfide-based solid electrolytes.

The size of the first sulfide-based solid electrolyte included in the interlayer 13 may be, for example, smaller than the size of the second sulfide-based solid electrolyte included in the positive electrode active material layer 12. The size of the first sulfide-based solid electrolyte included in the interlayer 13 may be, for example, 90 % or less, 80 % or less, 70 % or less, 60 % or less, 50 % or less, 40 % or less, 30 % or less, or 20 % or less, of the size of the second sulfide-based solid electrolyte included in the positive electrode active material layer 12. As the size of the first sulfide-based solid electrolyte is smaller than the size of the second sulfide-based solid electrolyte, spaces between the oxide-based positive electrode active material particles may be more densely packed, thereby more effectively suppressing the formation of voids within the interlayer 13. As a result, the internal resistance of the interlayer 13, the interfacial resistance between the interlayer 13 and the positive electrode current collector 11, and/or the interfacial resistance between the interlayer 13 and the positive electrode active material layer 12 may be more effectively reduced.

The D50 average particle diameter of the first sulfide-based solid electrolyte included in the interlayer 13 may be, for example, smaller than the D50 average particle diameter of the second sulfide-based solid electrolyte included in the positive electrode active material layer 12. The D50 average particle diameter of the first sulfide-based solid electrolyte included in the interlayer 13 may be 90 % or less, 80 % or less, 70 % or less, 60 % or less, 50 % or less, 40 % or less, 30 % or less, or 20 % or less, of the D50 average particle diameter of the second sulfide-based solid electrolyte included in the positive electrode active material layer 12. The D50 average particle diameter is, for example, a median particle diameter D50. The median particle diameter D50 may be a particle size corresponding to a 50 % cumulative volume calculated from particles having a small particle size in a particle size distribution measured by, for example, a laser diffraction method.

The content of the first sulfide-based solid electrolyte included in the interlayer 13 may be, for example, 0.1 wt% to 10 wt%, 0.5 to 5 wt%, or 0.5 to 2 wt%, of the total weight of the interlayer 13. If the content of the first sulfide-based solid electrolyte is excessively low, the ionic conductivity of the interlayer 13 may decrease. The cycle characteristics of the all-solid-state secondary battery 1 may deteriorate.

### [Interlayer: Binder]

The interlayer 13 may further include a binder. As the interlayer 13 includes a binder, the interlayer 13 may have improved adhesion with the positive electrode current collector 11 and the positive electrode active material layer 12. As the interlayer 13 includes a binder, the interlayer 13 may function as an adhesive layer. As the interlayer 13 includes a binder, delamination of the positive electrode active material layer 12 from the positive electrode current collector 11 may be effectively suppressed in spite of volume changes in the positive electrode active material layer 12 during charging and discharging of the all-solid-state secondary battery 1.

The binder may be, for example, one that exhibits oxidation resistance at high voltages. The binder may be, for example, styrene-butadiene rubber (SBR), carboxymethylcellulose, polyacrylic acid, polymethylmethacrylate, polyisobutylmethacrylate, polyethylacrylate, polybutylacrylate, polyimide, polyamideimide, polyacrylonitrile, polyvinyl acetate, polytetrafluoroethylene, polyvinylidene fluoride, polyethylene, or the like, but is not limited thereto. Any material used as a positive electrode binder in the art may be used. The content of the binder included in the interlayer 13 may be, for example, 0.1 wt% to 10 wt%, 0.5 to 5 wt%, or 0.5 to 2 wt%, of the total weight of the interlayer 13.

### [Interlayer: Others]

Based on 100 parts by weight of the interlayer 13, the interlayer 13 may include 80 to 99 parts by weight of the oxide-based positive electrode active material, 1 to 10 parts by weight of the first sulfide-based solid electrolyte, and 1 to 10 parts by weight of the binder.

Based on 100 parts by weight of the interlayer 13, the interlayer 13 may include 80 to 99 parts by weight, 85 to 99 parts by weight, 90 to 99 parts by weight, 90 to 99 parts by weight, 90 to 97 parts by weight, or 90 to 95 parts by weight of the oxide-based positive electrode active material. As the interlayer 13 includes the oxide-based positive electrode active material within the ranges above, excellent thermal stability and excellent charge/discharge characteristics may be provided at the same time.

Based on 100 parts by weight of the interlayer 13, the interlayer 13 may include 1 to 10 parts by weight, 1 to 5 parts by weight, or 1 to 3 parts by weight of the first sulfide-based solid electrolyte. As the interlayer 13 includes the first sulfide-based solid electrolyte within the ranges above, excellent thermal stability and excellent charge/discharge characteristics may be provided at the same time.

Based on 100 parts by weight of the interlayer 13, the interlayer 13 may include 1 to 10 parts by weight, 1 to 5 parts by weight, or 1 to 3 parts by weight of the binder. As the interlayer 13 includes the binder within the ranges above, excellent thermal stability and excellent charge/discharge characteristics may be provided at the same time.

The thickness of the interlayer 13 may be, for example, smaller than the thickness of the positive electrode active material layer 12. As the thickness of the interlayer 13 is smaller than the thickness of the positive electrode active material layer 12, a reduction in discharge capacity due to the interlayer 13 may be minimized. The thickness of the interlayer 13 may be, for example, 20 % or less, 10 % or less, 5% or less, 3% or less, or 2% or less, of the thickness of the positive electrode active material layer 12. The thickness of the interlayer 13 may be, for example, 0.1 to 20 %, 0.5 to 10 %, 1 to 5 %, 1 to 3 %, or 1 to 2 %, of the thickness of the positive electrode active material layer 12. As the thickness of the interlayer 13 is within the ranges above, the all-solid-state secondary battery 1 may be provided with excellent thermal stability and improved charge/discharge characteristics while suppressing a decrease in the capacity of the all-solid-state secondary battery 1.

The thickness of the interlayer 13 may be, for example, 10 µm or less, 5 µm or less, 3 µm or less, 2 µm or less, or 1 µm or less. The thickness of the interlayer 13 may be, for example, 0.1 to 10 µm, 0.5 to 5 µm, 1 to 5 µm, 1 to 4 µm, or 1 to 3 µm. As the thickness of the interlayer 13 is within the ranges above, the all-solid-state secondary battery 1 may be provided with excellent thermal stability and improved charge/discharge characteristics while suppressing a decrease in the capacity of the all-solid-state secondary battery 1. The thickness of the interlayer 13 may be measured by, for example, a scanning electron microscope.

### [Carbon layer]

Referring to FIGS. 1 to 7, the positive electrode 10 may further include a carbon layer (not shown) arranged between the positive electrode current collector 11 and the interlayer 13.

The carbon layer is, for example, arranged directly on one side or both sides of the positive electrode current collector 11. Other layers may not be arranged between the positive electrode current collector 11 and the carbon layer. If the carbon layer is arranged directly on one side or both sides of the positive electrode current collector 11, the adhesion between the positive electrode current collector 11 and the interlayer 13 and/or the adhesion between the positive electrode current collector 11 and the positive electrode active material layer 12 may be further improved. If the carbon layer is arranged between the positive electrode current collector 11 and the interlayer 13, degradation of the all-solid-state secondary battery 1 during charge-discharge cycles is suppressed, and the cycle characteristics of the all-solid-state secondary battery 1 may be further improved.

The thickness of the carbon layer may be, for example, smaller than the thickness of the interlayer 13. The thickness of the carbon layer may be, for example, 90 % or less, 80 % or less, 70 % or less, or 50 % or less, of the thickness of the interlayer 13. The thickness of the carbon layer may be, for example, 0.1 to 30 %, 1 to 20 %, or 5 to 15 %, of the thickness of the positive electrode current collector 11. The thickness of the carbon layer may be, for example, 5 µm or less, 4 µm or less, or 3 µm or less. The thickness of the carbon layer may be, for example, 0.1 to 5 µm, 0.5 to 5 µm, 1 to 5 µm, or 1 to 3 µm. As the thickness of the carbon layer is with the ranges above, the adhesion between the positive electrode current collector 11 and the interlayer 13 is further improved, and an increase in the interfacial resistance is suppressed. The thickness of the carbon layer may be, for example, measured from a scanning electron microscope (SEM) image of a cross-section of the carbon layer.

The carbon layer includes, for example, a carbon-based conductive material. The carbon-based conductive material included in the carbon layer may be selected from carbon-based conductive materials used in the positive electrode active material layer 12. The carbon layer may include the same carbon-based conductive material as the carbon-based conductive material used in the positive electrode active material layer 12. As the carbon layer includes the carbon-based conductive material, the carbon layer may, for example, serve as a conductive layer.

The carbon layer may, for example, additionally include a binder. As the carbon layer additionally includes a binder, the adhesion between the positive electrode current collector 11 and the interlayer 13 may be further improved. The binder included in the carbon layer is, for example, a conductive binder or a non-conductive binder. The conductive binder is, for example, an ion-conductive binder and/or an electron-conductive binder. A binder having both ion conductivity and electron conductivity may belong to both an ion-conductive binder and an electron-conductive binder.

The binder included in the carbon layer may be selected from binders used in the positive electrode active material layer 12. The carbon layer may include the same binder as the binder used in the positive electrode active material layer 12. The binder included in the carbon layer is, for example, a fluorine-based binder. The fluorine-based binder included in the carbon layer is, for example, polyvinylidene fluoride (PVDF), polytetrafluoroethylene (PTFE), or a combination thereof. The carbon layer may be, for example, a binding-containing adhesive layer. The carbon layer may be, for example, a conductive layer including the binder and the carbon-based conductive material.

The carbon layer may be, for example, arranged on the positive electrode current collector 11 by a dry method or a wet method. The carbon layer may be, for example, arranged on the positive electrode current collector 11 by a dry method, such as deposition (CVD or PVD). The carbon layer may be, for example, arranged on the positive electrode current collector 11 by a wet method such as spin coating, dip coating, or the like. The carbon layer may be, for example, arranged on the positive electrode current collector 11 by depositing the carbon-based conductive material on a substrate by deposition. Such a dry-coated carbon layer consists of the carbon-based conductive material, and may not include the binder. The carbon layer may be, for example, arranged on the positive electrode current collector 11 by applying a composition including the carbon-based conductive material, the binder, and a solvent onto the surface of the positive electrode current collector 11, and then drying the composition. The carbon layer may have a single-layer structure or a multi-layer structure including a plurality of layers. The multi-layer structure may be a two-layer structure, a three-layer structure, a four-layer structure, or the like.

### [Positive electrode active material layer]

Referring to FIGS. 1 to 7, the positive electrode 10 includes the positive electrode current collector 11 and the positive electrode active material layer 12.

### [Positive electrode active material layer: Composite positive electrode active material]

The positive electrode active material layer 12 includes a composite positive electrode active material and a second sulfide-based solid electrolyte.

The composite positive electrode active material includes a composite of Li₂S, a first ionic compound, and a first carbon-based material.

If Li₂S forms a composite with first ionic compound and the first carbon-based material, the ionic conductivity and electronic conductivity of Li₂S may be simultaneously improved. As the composite of Li₂S, the first ionic compound, and the first carbon-based material includes the first ionic compound, the ionic conductivity of the composite positive electrode active material is improved, and the internal resistance of the positive electrode 10 and the all-solid-state secondary battery 1 that include the composite positive electrode active material may be reduced. As the composite of Li₂S, the first ionic compound, and the first carbon-based material includes the first carbon-based material, the electronic conductivity of the composite positive electrode active material is improved, and the internal resistance of the positive electrode 10 and the all-solid-state secondary battery 1 that include the composite positive electrode active material may be reduced. As a result, the charge/discharge characteristics of the all-solid-state secondary battery 1 including the composite positive electrode active material may be improved.

The composite of Li₂S, the first ionic compound, and the first carbon-based material is distinguished from a simple mixture of Li₂S, the first ionic compound, and the first carbon-based material. A simple mixture of Li₂S, the first ionic compound, and the first carbon-based material may provide high interfacial resistance because it fails to maintain a dense interface among Li₂S, the first ionic compound, and the first carbon-based material, and as a result, may deteriorate the lifespan characteristics of the all-solid-state secondary battery 1.

As a core includes the composite of Li₂S, the first ionic compound, and the first carbon-based material and a shell including an organic filler is arranged on the core, the thermal stability and moisture stability of the composite positive electrode active material may be improved For example, as the composite of Li₂S, the first ionic compound, and the first carbon-based material includes the first carbon-based material, and the first carbon-based material having a large specific surface area is in contact with oxygen, the first carbon-based material may combine with oxygen to generate heat of oxidation. Ignition of the first carbon-based material may easily occur due to such heat of oxidation. As the core includes the composite of Li₂S, the first ionic compound, and the first carbon-based material, and the shell including an organic filler is arranged on the core, the contact between the first carbon-based material and oxygen may be blocked. Oxidation of the first carbon-based material and/or the generation of heat of oxidation is suppressed. The thermal stability of the composite positive electrode active material may be accordingly improved. In addition, if the core includes the composite of Li₂S, the first ionic compound, and the first carbon-based material, and the shell including an organic filler is arranged on the core, deterioration of the core due to moisture in the atmosphere may be suppressed. The moisture stability of the composite positive electrode active material may be accordingly improved. As a result, since the composite positive electrode active material has improved thermal stability and improved moisture stability, the charge/discharge characteristics of the all-solid-state secondary battery 1 including the composite positive electrode active material may be improved.

As the core includes the composite of Li₂S, the first ionic compound, and the first carbon-based material, and the shell including an organic filler is arranged on the core, side reactions between the core and the solid electrolyte in the positive electrode may be effectively blocked. Deterioration of the all-solid-state secondary battery 1 due to side reactions between the core and the solid electrolyte may be accordingly prevented. In contrast, in an all-solid-state secondary battery in which the core is in direct contact with a solid electrolyte, for example, a sulfide-based solid electrolyte, the all-solid-state secondary battery may deteriorate due to side reactions between the core and the solid electrolyte during charging and discharging.

The composite positive electrode active material includes a core, and the core includes the composite of Li₂S, the first ionic compound, and the first carbon-based material. The composite of Li₂S, the first ionic compound, and the first carbon-based material may, for example, include a composite represented by Li₂S-LiₐX_{b}-C (1≤a≤5, 1≤b≤5), a composite represented by Li₂S-M1ₐX_{b}-C (1≤a≤5, 1≤b≤5), a composite represented by Li₂S-M1ₐS_{b}-C (1≤a≤5, 1≤b≤5), or a combination thereof. M1 is, for example, Mg, Ca, Sr, Ba, Al, Ga, In, V, Nb, Sc, Fe, Ru, Os, or a combination thereof. X is, for example, I, Br, Cl, F, H, O, Se, Te, N, P, As, Sb, Al, B, OCl, PF₆, BF₄, SbF₆, AsF₆, ClO₄, AlO₂, AlCl₄, NO₃, CO₃, BH₄, SO₄, BO₃, PO₄, NCl, NCl₂, BN₂, or a combination thereof. a is, for example, 1, 2, 3, 4, or 5. b is, for example, 1, 2, 3, 4, or 5. C denotes a carbon-based material.

The first ionic compound is, for example, a first lithium salt, a first metal salt, a first metal sulfide, or a combination thereof.

The first lithium salt is, for example, a compound that does not contain sulfur (S). The first lithium salt may be, for example, a binary compound or a ternary compound. The first lithium salt may be, for example, a binary compound consisting of lithium and one element selected from Groups 13 to 17 of the Periodic Table of Elements. The lithium salt may be, for example, a ternary compound consisting of lithium and two elements selected from Groups 13 to 17 of the Periodic Table of Elements. The binary compound may include, for example, LiI, LiBr, LiCl, LiF, LiH, Li₂O, Li₂Se, Li₂Te, Li₃N, Li₃P, Li₃As, Li₃Sb, Li₃Al₂, LiB₃, or a combination thereof. As the composite positive electrode active material includes such a binary compound, the ionic conductivity of the composite positive electrode active material may be further improved. As the positive electrode 10 includes such a composite positive electrode active material, the internal resistance of the positive electrode 10 provided with the composite positive electrode active material may be further reduced. As a result, the cycle characteristics of the all-solid-state secondary battery 1 including the positive electrode 10 may be further improved. The ternary compound may include, for example, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof. By the composite positive electrode active material containing such a ternary compound, the ionic conductivity of the composite positive electrode active material may be further improved. If the positive electrode 10 includes such a composite positive electrode active material, the internal resistance of the positive electrode 10 may be further reduced. As a result, the cycle characteristics of the all-solid-state secondary battery 1 including the positive electrode 10 may be further improved.

The first metal salt is, for example, a compound that does not contain lithium (Li). The first metal salt may be, for example, a compound consisting of a metal other than Li and an element selected from Groups 13 to 17 of the Periodic Table of Elements. The first metal salt may include, for example, AlF₃, AlCl₃, AlBr₃, CaF₂, CaCl₂, CaBr₂, or a combination thereof. As the composite positive electrode active material includes such a first metal salt compound, the ionic conductivity of the composite positive electrode active material may be further improved. If the positive electrode includes such a composite positive electrode active material, the internal resistance of the positive electrode provided with the composite positive electrode active material may be further reduced. As a result, the cycle characteristics of the all-solid-state secondary battery including the positive electrode may be further improved.

The first metal sulfide is, for example, a sulfide that does not contain Li. The first metal sulfide may be, for example, a compound consisting of a metal other than Li and an element selected from Groups 13 to 17 of the Periodic Table of Elements. The first metal sulfide may include, for example, FeS, MgS, CaS, Al₂S₃, V₂S₃ FeS₂, VS₂, MnS, NiS, CuS, or a combination thereof. As the composite positive electrode active material includes such a first metal sulfide, the ionic conductivity of the composite positive electrode active material may be further improved. As the positive electrode includes such a composite positive electrode active material, the internal resistance of the positive electrode provided with the composite positive electrode active material may be further reduced. As a result, the cycle characteristics of the all-solid-state secondary battery including the positive electrode may be further improved.

The composite of Li₂S, the first ionic compound, and the first carbon-based material may include, for example, a solid solution of Li₂S and the first ionic compound. As the composite of Li₂S, the first ionic compound, and the first carbon-based material includes the solid solution of Li₂S and the first ionic compound, the composite of Li₂S, the first ionic compound, and the first carbon-based material may have increased ionic conductivity. For example, if the solid solution of Li₂S and the first ionic compound contains lithium ions arranged within Li₂S crystallites, the ionic conductivity of the solid solution of Li₂S and the first ionic compound may be improved compared to the ionic conductivity of Li₂S alone. As a result, the ionic conductivity of the composite of Li₂S, the first ionic compound, and the first carbon-based material may be improved, and the internal resistance of the composite of Li₂S, the first ionic compound, and the first carbon-based material may be also reduced. As the composite positive electrode active material includes such a composite, the ionic conductivity of the composite positive electrode active material may be further improved. As the positive electrode 10 includes such a composite positive electrode active material, the internal resistance of the positive electrode 10 provided with the composite positive electrode active material may be further reduced. As a result, the cycle characteristics of the all-solid-state secondary battery 1 including the positive electrode 10 may be further improved.

The size of the Li₂S crystallites obtained from an X-ray diffraction (XRD) spectrum of the composite of Li₂S, the first ionic compound, and the first carbon-based material may be, for example, 20 nm or less, 15 nm or less, or 10 nm or less. The size of the Li₂S crystallites obtained from the XRD spectrum of the composite of Li₂S, the first ionic compound, and the first carbon-based material may be, for example, 1 to 20 nm, 1 to 15 nm, or 3 to 10 nm. As the size of the Li₂S crystallites decreases, the contact area between Li₂S and the first ionic compound may be further increased. As the contact area between Li₂S and the first ionic compound is further increased, the ionic conductivity of the composite of Li₂S and the first ionic compound may be further increased. As the composite positive electrode active material includes such a composite, the ionic conductivity of the composite positive electrode active material may be further improved. As the positive electrode 10 includes such a composite positive electrode active material, the internal resistance of the positive electrode 10 provided with the composite positive electrode active material may be further reduced. As a result, the cycle characteristics of the all-solid-state secondary battery 1 including the positive electrode 10 may be further improved.

In the composite of Li₂S, the first ionic compound, and the first carbon-based material, the content of Li₂S may be, for example, higher than the content of the first ionic compound. In the composite of Li₂S, the first ionic compound, and the first carbon-based material, the molar ratio of Li₂S to the first ionic compound may be, for example, 50:50 to 95:5, 55:45 to 90:10, 60:40 to 90:10, or 70:30 to 90:10. As the composite of Li₂S, the first ionic compound, and the first carbon-based material has such a molar ratio of Li₂S to the first ionic compound, the composite of Li₂S, the first ionic compound, and the first carbon-based material may simultaneously provide improved ionic conductivity and excellent ductility. As a result, the durability of the composite positive electrode active material including the composite of Li₂S, the first ionic compound, and the first carbon-based material may be improved. The durability of the positive electrode including the composite positive electrode active material and the all-solid-state secondary battery may be improved. If the molar ratio of Li₂S is excessively high, the effect of improving ionic conductivity by the lithium salt may be insignificant. If the molar ratio of Li₂S is excessively low, the energy density of a secondary battery including the composite positive electrode active material may be reduced.

The composite of Li₂S, the first ionic compound, and the first carbon-based material includes Li₂S. Li₂S has a high theoretical capacity, and thus the all-solid-state secondary battery 1 may be provided with a high energy density. Li₂S has low ionic conductivity and/or electronic conductivity, and thus the first ionic compound and the first carbon-based material form a composite to overcome these drawbacks. In the composite of Li₂S, the first ionic compound, and the first carbon-based material, the content of Li₂S is, for example, 30 to 95 wt%, 50 to 95 wt%, or 50 to 90 wt%, 50 to 80 wt%, or 50 to 70 wt%, of the total weight of the composite of Li₂S, the first ionic compound, and the first carbon-based material Alternatively, in the composite of Li₂S, the first ionic compound, and the first carbon-based material, the content of Li₂S is, for example, 10 to 95 wt%, 10 to 80 wt%, or 20 to 70 wt%, 30 to 60 wt%, or 40 to 60 wt%, of the total weight of the composite of Li₂S, the first ionic compound, and the first carbon-based material. As the composite of Li₂S, the first ionic compound, and the first carbon-based material has the Li₂S content within the ranges above, improved ionic conductivity and excellent ductility may be simultaneously provided. As a result, the composite positive electrode active material including the composite of Li₂S, the first ionic compound, and the first carbon-based material, and the positive electrode and the all-solid-state secondary battery that include the composite positive electrode active material may have improved durability. If the content of Li₂S is excessively increased, the ionic conductivity and/or electronic conductivity of Li₂S may not be easily improved. If the content of Li₂S is excessively low, the energy density of the secondary battery may be reduced.

In the composite of Li₂S, the first ionic compound, and the first carbon-based material, the content of the first ionic compound is, for example, 1 to 50 wt%, 5 to 50 wt%, 10 to 50 wt%, 20 to 50 wt%, or 30 to 50 wt%, of the total weight of the composite of Li₂S, the first ionic compound, and the first carbon-based material. As the composite of Li₂S, the first ionic compound, and the first carbon-based material has the first ionic compound content within the ranges above, improved ionic conductivity and excellent ductility may be simultaneously provided. As a result, the durability of the composite positive electrode active material including the composite of Li₂S, the first ionic compound, and the first carbon-based material may be improved.

In the composite of Li₂S, the first ionic compound, and the first carbon-based material, the content of the first carbon-based material is, for example, 1 to 20 wt%, 5 to 20 wt%, or 10 to 20 wt%, of the total weight of the composite of Li₂S, the first ionic compound, and the first carbon-based material. If the content of the first carbon-based material is excessively increased, the energy density of the all-solid-state secondary battery 1 may be reduced. If the content of the first carbon-based material is excessively decreased, the electronic conductivity of the composite of Li₂S, the first ionic compound, and the first carbon-based material may decrease, so that the internal resistance of the composite positive electrode active material may increase. As a result, the cycle characteristics of the all-solid-state secondary battery 1 may deteriorate.

Based on 100 parts by weight of the composite of Li₂S, the first ionic compound, and the first carbon-based material, the composite may include, for example, 10 to 80 parts by weight of Li₂S, 1 to 40 parts by weight of the first ionic compound, and 1 to 20 parts by weight of the first carbon-based material. The content of Li₂S included in the composite of Li₂S, the first ionic compound, and the first carbon-based material may be, for example, 10 to 80 parts by weight, 20 to 70 parts by weight, 30 to 60 parts by weight, or 40 to 60 parts by weight, based on 100 parts by weight of the composite of Li₂S, the first ionic compound, and the first carbon-based material. The content of the first ionic compound included in the composite of Li₂S, the first ionic compound, and the first carbon-based material may be, for example, 1 to 40 parts by weight, 5 to 40 parts by weight, 10 to 40 parts by weight, 15 to 40 parts by weight, 20 to 40 parts by weight, or 25 to 35 parts by weight, based on 100 parts by weight of the composite of Li₂S, the first ionic compound, and the first carbon-based material. The content of the first carbon-based material included in the composite of Li₂S, the first ionic compound, and the first carbon-based material may be, for example, 1 to 20 parts by weight, 5 to 20 parts by weight, or 10 to 20 parts by weight, based on 100 parts by weight of the composite of Li₂S, the first ionic compound, and the first carbon-based material. As the composite of Li₂S, the first ionic compound, and the first carbon-based material has such composition of Li₂S, the first ionic compound, and the first carbon-based material, the composite positive electrode active material including the composite of Li₂S, the first ionic compound, and the first carbon-based material may provide excellent ionic conductivity and/or electronic conductivity.

The size of the composite of Li₂S, the first ionic compound, and the first carbon-based material may be, for example, 1 to 20 µm, 1 to 15 µm, 1 to 10 µm, 2 to 10 µm, or 3 to 10 µm. As the composite of Li₂S, the first ionic compound, and the first carbon-based material has such a size within the ranges above, improved ionic conductivity and electronic conductivity may be simultaneously provided. If the size of the composite of Li₂S, the first ionic compound, and the first carbon-based material is too small, the carbon-based material may be pulverized such that it may be difficult to secure conductive paths between the composite positive electrode active material particles. If the size of the composite of Li₂S, the first ionic compound, and the first carbon-based material is too large, the degree of compositing may be lowered. In this regard, it may be difficult to secure electronically conductive paths and ionically conductive paths inside the composite of Li₂S, the first ionic compound, and the first carbon-based material. The size of the composite of Li₂S, the first ionic compound, and the first carbon-based material may be, for example, a D50 particle diameter. The size of the composite of Li₂S, the first ionic compound, and the first carbon-based material may be, for example, measured by using a particle size analyzer (PSA) using a laser. The size of the composite of Li₂S, the first ionic compound, and the first carbon-based material may be, for example, calculated by software from a scanning electron microscope image of composite powders.

The D10 particle diameter of the composite of Li₂S, the first ionic compound, and the first carbon-based material may be, for example, 1 µm or more, 1.2 µm or more, 1.5 µm or more, or 2 µm or more. As the D10 particle diameter of the composite of Li₂S, the first ionic compound, and the first carbon-based material within the ranges above, the fine particle content of the composite of Li₂S, the first ionic compound, and the first carbon-based material may be reduced. As the fine particle content of the composite of Li₂S, the first ionic compound, and the first carbon-based material decreases, the density of the positive electrode 10 including the composite positive electrode active material may be increased, thereby improving the energy density of the all-solid-state secondary battery 1 including the positive electrode 10. As the fine particle content of the composite of Li₂S, the first ionic compound, and the first carbon-based material increases, the interfacial resistance between particles of the composite of Li₂S, the first ionic compound, and the first carbon-based material may be increased, making it more difficult to form a conductive network. As a result, the cycle characteristics of the all-solid-state secondary battery 1 including the composite of Li₂S, the first ionic compound, and the first carbon-based material may deteriorate. The D10 particle size may be, for example, measured by using a PSA using a laser.

The particle size of Li₂S included in the composite of Li₂S, the first ionic compound, and the first carbon-based material may be, for example, 2 µm or less, 1.5 µm or less, or 1 µm or less. The particle size of Li₂S included in the composite of Li₂S, the first ionic compound, and the first carbon-based material may be, for example, 0.1 to 2 µm, 0.1 to 1.5 µm, or 0.1 to 1 µm. As the particle size of Li₂S is within the ranges above, volume changes during charging and discharging are suppressed, thereby suppressing deterioration of the composite positive electrode active material including the composite of Li₂S, the first ionic compound, and the first carbon-based material during charging and discharging. If the particle size of Li₂S is excessively increased, the volume changes of the composite of Li₂S, the first ionic compound, and the first carbon-based material during charge and discharge are increased, thereby promoting the deterioration of the composite positive electrode active material including the composite. As a result, the cycle characteristics of the all-solid-state secondary battery 1 including the composite positive electrode active material may deteriorate. The particle size of Li₂S included in the composite of Li₂S, the first ionic compound, and the first carbon-based material may be, for example, measured by using a scanning electron microscope, a transmission electron microscope, or the like.

The composite of Li₂S, the first ionic compound, and the first carbon-based material includes the first carbon-based material. The first carbon-based material may be, for example, any material including carbon atoms and available as a conductive material in the art.

The first carbon-based material may include, for example, amorphous carbon, crystalline carbon, or a combination thereof. As the first carbon-based material includes amorphous carbon, side reactions between the first carbon-based material and the solid electrolyte may be suppressed. Therefore, the cycle characteristics of the all-solid-state secondary battery 1 including the composite of Li₂S, the first ionic compound, and the first carbon-based material may be further improved. The first carbon-based material may be, for example, a calcined product of a carbon precursor.

The first carbon-based material may include, for example, carbon nanostructures. The carbon nanostructures may include, for example, one-dimensional carbon nanostructures, two-dimensional carbon nanostructures, three-dimensional carbon nanostructures, or a combination thereof. The carbon nanostructures may be, for example, carbon nanofibers, carbon nanotubes, carbon nanobelts, carbon nanorods, graphene, or a combination thereof.

The first carbon-based material may include, for example, a porous carbon-based material or a non-porous carbon-based material. The porous carbon-based material may include, for example, periodic and ordered two-dimensional or three-dimensional pores. Alternatively, the porous carbon-based material may include, for example, non-periodic and irregular two-dimensional or three-dimensional pores.

The first carbon-based material may include, for example, a fibrous carbon-based material, a particulate carbon-based material, or a combination thereof.

The first carbon-based material may include, for example, a fibrous carbon-based material. As the composite of Li₂S, the first ionic compound, and the first carbon-based material includes a fibrous carbon-based material, the electronic conductivity of the composite of Li₂S, the first ionic compound, and the first carbon-based material may be further improved. As the composite of Li₂S, the first ionic compound, and the first carbon-based material includes a fibrous carbon-based material, the electron conduction from the surface to the interior of the composite of Li₂S, the first ionic compound, and the first carbon-based material may be performed more easily. The internal resistance of the composite positive electrode active material including the composite of Li₂S, the first ionic compound, and the first carbon-based material may be reduced. As a result, the cycle characteristics of the all-solid-state secondary battery 1 including the composite positive electrode active material may be further improved. The aspect ratio of the fibrous carbon-based material may be, for example, 5 or more, 10 or more, or 20 or more. The aspect ratio of the fibrous carbon-based material may be, for example, 3 to 30, 4 to 30, 5 to 30, 10 to 30, or 20 to 30. The aspect ratio of the fibrous carbon-based material may be, for example, 5 to 30, 5 to 20, or 5 to 10. As the fibrous carbon-based material has such an aspect ratio within the ranges above, the overall electronic conductivity of the composite may be improved, and the local imbalance of electronic conductivity within the composite may be further alleviated. The fibrous carbon-based material may include, for example, carbon nanostructures. The carbon nanostructure may include, for example, a carbon nanofiber (CNF), a carbon nanotube (CNT), a carbon nanobelt, a carbon nanorod, or a combination thereof. The carbon nanostructure may form a primary carbon nanostructure consisting of single carbon nanostructure and a secondary carbon nanostructure formed by agglomeration of a plurality of carbon nanostructures. The aspect ratio of the fibrous carbon-based material may be, for example, measured from scanning electron microscope (SEM) or transmission electron microscope (TEM) images.

The diameter of the primary carbon nanostructure may be, for example, 1 nm to 200 nm, 1 nm to 150 nm, 1 nm to 100 nm, 1 nm to 50 nm, 1 nm to 30 nm, or 1 nm to 20 nm. The length of the primary carbon nanostructure may be, for example, 10 nm to 2 µm, 10 nm to 1.5 µm, 10 nm to 1 µm, 10 nm to 500 nm, 10 nm to 400 nm, 10 nm to 300 nm, 10 nm to 200 nm, or 10 nm to 100 nm. The diameter and the length of the primary carbon nanostructure may be measured from SEM or TEM images. Alternatively, the diameter and/or the length of the primary carbon nanostructure may be measured by a laser diffraction method.

The secondary carbon nanostructure is a structure formed by assembling primary carbon nanostructures wholly or partially into a bundle-type or rope-type form. The secondary carbon nanostructure may include, for example, a bundle-type carbon nanostructure, a rope-type carbon nanostructure, or a combination thereof. The diameter of the secondary carbon nanostructure may be, for example, 2 nm to 200 nm, 3 nm to 150 nm, 5 nm to 100 nm, 5 nm to 50 nm, 5 nm to 30 nm, or 5 nm to 20 nm. The length of the secondary carbon nanotube structure may be, for example, 20 nm to 2 µm, 30 nm to 1.5 µm, 50 nm to 1 µm, 50 nm to 500 nm, 50 nm to 400 nm, 50 nm to 300 nm, 50 nm to 200 nm, or 50 nm to 100 nm. The diameter and the length of the secondary carbon nanostructure may be measured from SEM images or by using an optical microscope. Alternatively, the diameter and/or the length of the secondary carbon nanostructure may be measured by a laser diffraction method. The secondary carbon nanostructure may be, for example, dispersed in a solvent or the like to be converted into primary carbon nanostructures, after which the primary carbon nanostructures are used in the preparation of a composite.

The first carbon-based material may include, for example, a particulate carbon-based material. The particulate carbon-based material may include, for example, carbon blacks such as ketjen black, acetylene black, Denka black, thermal black, and channel black; graphite, activated carbon, or a combination thereof. The aspect ratio of the particulate carbon-based material may be, for example, 4 or less, 3 or less, or 2 or less. The aspect ratio of the particulate carbon-based material may be, for example, 1 to 4, 1 to 3, or 1 to 2.

### [Positive electrode active material layer: Second sulfide-based solid electrolyte]

The positive electrode active material layer 12 includes a second sulfide-based solid electrolyte. The second sulfide-based solid electrolyte included in the positive electrode active material layer 12 may be the same as or different from those included in an electrolyte layer 30. The second sulfide-based solid electrolyte may be selected from the first sulfide-based solid electrolytes of the interlayer.

The second sulfide-based solid electrolyte included in the positive electrode active material layer 12 may have a smaller D50 average particle diameter than the solid electrolyte included in the electrolyte layer 30. For example, the D50 average particle diameter of the second sulfide-based solid electrolyte included in the positive electrode active material layer 12 may be 90 % or less, 80 % or less, 70 % or less, 60 % or less, 50 % or less, 40 % or less, 30 % or less, or 20 % or less, of the D50 average particle diameter of the solid electrolyte included in the electrolyte layer 30. The D50 average particle diameter is, for example, a median particle diameter D50. The median particle diameter D50 may be a particle size corresponding to a 50 % cumulative volume calculated from particles having a small particle size in a particle size distribution measured by, for example, a laser diffraction method.

Based on 100 parts by weight of the positive electrode active material layer 12, the positive electrode active material layer 12 includes 10 to 90 parts by weight, 10 to 80 parts by weight, 10 to 60 parts by weight, 10 to 50 parts by weight, 20 to 50 parts by weight, or 30 to 50 parts by weight of the second sulfide-based solid electrolyte. If the content of the second sulfide-based solid electrolyte is excessively reduced, the internal resistance of the positive electrode 10 increases, thereby degrading the cycle characteristics of the all-solid-state secondary battery 1. If the content of the second sulfide-based solid electrolyte is excessively increased, the energy density of the all-solid-state secondary battery 1 may be reduced.

### [Positive electrode active material layer: Conductive material]

The positive electrode active material layer 12 may further include a conductive material. The conductive material may be, for example, a carbon-based conductive material, a metal-based conductive material, or a combination thereof. The carbon-based conductive material may be, for example, graphite, carbon black, acetylene black, ketjen black, carbon fiber, or a combination thereof, but is not limited thereto. Any material used as a carbon-based conductive material in the art may be used. The metal-based conductive material may be metal powder, metal fiber, or a combination thereof, but is not limited thereto. Any material used as a metal-based conductive material in the art may be used. The content of the conductive material included in the positive electrode active material layer 12 may be, for example, 1 wt% to 30 wt%, 1 wt% to 20 wt%, or 1 wt% to 10 wt%, of the total weight of the positive electrode active material layer 12.

The positive electrode active material layer 12 may further include a second carbon-based material as the conductive material. The second carbon-based material may include, for example, a fibrous carbon-based material. The aspect ratio of the fibrous carbon-based material may be, for example, 5 or more, 10 or more, or 20 or more.

The fibrous carbon-based material may include, for example, a fibrous carbon nanostructure. The fibrous carbon nanostructure may include, for example, carbon nanofibers, carbon nanotubes, carbon nanobelts, carbon nanorods, or a combination thereof. The second carbon-based material is distinguished from the first carbon-based material, which constitutes a part of the composite positive electrode active material, in that the second carbon-based material is simply mixed with the composite positive electrode active material.

The positive electrode active material layer 12 may not further include the second carbon-based material. In the positive electrode active material layer 12, the carbon-based material may be arranged only in the composite positive electrode active material. The positive electrode active material layer 12 may not additionally include a separate second carbon-based material other than the composite positive electrode active material provided with the first carbon-based material. By not additionally including the second carbon-based material in the positive electrode active material layer, the energy density of the positive electrode 10 and the all-solid-state secondary battery 1 may be improved and the manufacturing process may be simplified.

### [Positive electrode active material layer: Binder]

The positive electrode active material layer 12 may further include a binder. The binder may be, for example, SBR, polytetrafluoroethylene, polyvinylidene fluoride, polyethylene, or the like, but is not limited thereto. Any material used as a binder in the art may be used. The content of the binder included in the positive electrode active material layer 12 may be, for example, 0.1 wt% to 10 wt%, 0.5 to 5 wt%, or 0.5 to 2 wt%, of the total weight of the positive electrode active material layer 12. The binder may be omitted.

### [Positive electrode active material layer: Other additives]

The positive electrode active material layer 12 may further include, for example, additives such as a filler, a coating agent, a dispersant, an ion-conductive auxiliary agent, and the like, in addition to the positive electrode active material, the solid electrolyte, the binder, and the conductive material described above.

As the filler, the coating agent, the dispersant, the ion-conductive auxiliary agent, and the like that the positive electrode active material layer 12 may include, known materials generally used for electrodes of all-solid-state secondary batteries may be used.

### [Positive electrode active material layer: Dry-type positive electrode film]

Referring to FIGS. 1 to 7, the positive electrode active material layer 12 may include, for example, a dry-type positive electrode active material layer 12.

The dry-type positive electrode active material layer 12 is manufactured without using a process solvent, and thus is distinguished from a wet-type positive electrode active material layer prepared from a slurry in which a positive electrode mixture is mixed with a solvent. In this regards, drawbacks such as uneven binder concentration that occur during the drying of the process solvent in the manufacturing process of the dry-type positive electrode active material layer 12 may be overcome. The dry-type positive electrode active material layer 12 may have improved homogeneity of binder distribution within the positive electrode active material layer 12 compared to the wet-type positive electrode active material layer.

The dry-type positive electrode active material layer 12 may include a dry composite positive electrode active material and a dry second sulfide-based solid electrolyte.

The dry-type positive electrode active material layer 12 may include, for example, a dry composite positive electrode active material. The dry composite positive electrode active material is a composite positive electrode active material that is not impregnated, dissolved, or dispersed in a process solvent during the manufacturing process of the dry-type positive electrode active material layer 12. The dry composite positive electrode active material is, for example, a composite positive electrode active material that does not contain a process solvent or come into contact with a process solvent during the manufacturing process of the dry positive electrode active material layer 12.

The dry-type positive electrode active material layer 12 may include, for example, a dry second sulfide-based solid electrolyte. Such a dry sulfide-based solid electrolyte is a second sulfide-based solid electrolyte that is not impregnated, dissolved, or dispersed in a process solvent during the manufacturing process of the dry-type positive electrode active material layer 12. The dry second sulfide-based solid electrolyte is, for example, a second sulfide-based solid electrolyte that does not contain a process solvent or come into contact with a process solvent during the manufacturing process of the dry positive electrode active material layer 12.

The dry-type positive electrode active material layer 12 may include a dry binder. The dry binder is, for example, a binder that is not impregnated, dissolved, or dispersed in a process solvent during the manufacturing process of the dry-type positive electrode active material layer 12. The dry binder is, for example, a binder that does not contain a process solvent or come into contact with a process solvent during the manufacturing process of the dry positive electrode active material layer 12. The dry binder is, for example, a fibrillized binder or a fibrous binder. The fibrillized binder or the fibrous binder may serve as a porous matrix that supports and binds the dry positive electrode active material and other components included in the dry positive electrode active material layer 12. The fibrillized binder or the fibrous binder is intermittently arranged on the surface of the dry positive electrode active material without agglomeration, and binds a plurality of dry positive electrode active materials together, thereby effectively suppressing an increase in the internal resistance of the dry-type positive electrode active material layer 12 caused by the dry binder. The fibrillized binder or the fibrous binder may be, for example, identified as having a fibrous morphology as shown in SEM images of a cross-section of a dry positive electrode. The aspect ratio of the fibrillized binder or fibrous binder is, for example, 10 or more, 20 or more, 50 or more, or 100 or more.

The dry binder includes, for example, PTFE, a polyvinylidene fluoride-hexapropylene (PVDF-HFP) copolymer, PVDF, polyvinyl alcohol, polyacrylonitrile, carboxymethyl cellulose (CMC), starch, hydroxypropyl cellulose, cellulose, polyvinylpyrrolidone, polyethylene, polypropylene, ethylene-propylene-diene polymer (EPDM), sulfonated-EPDM, SBR, a fluoro rubber, or a copolymer thereof, but is not necessarily limited thereto. Any binder used in the manufacture of dry electrodes may be used. The dry binder may include, in particular, a fluorine-based binder. The fluorine-based binder is, for example, PTFE, a PVDF-HFP copolymer, or PVDF.

The dry-type positive electrode active material layer 12 may include, for example, a dry positive electrode film. The dry-type positive electrode active material layer 12 may be, for example, formed by arranging a dry positive electrode film on the positive electrode current collector 11. The dry positive electrode film may have substantially the same composition and configuration as the aforementioned dry-type positive electrode active material layer 12.

The dry positive electrode film is, for example, a self-standing film. The dry positive electrode film may maintain, for example, a film form without a support. Accordingly, the dry positive electrode film may be prepared as a separate self-standing film, and then arranged on the positive electrode current collector 11. The dry positive electrode film is manufactured by a dry process, and thus does not contain a processing solvent that is intentionally added. For example, the positive electrode film does not contain a residual processing solvent. An unintended trace amount of solvent may remain in the dry positive electrode film, but such a solvent is not an intentionally added processing solvent. Accordingly, the dry positive electrode film is distinguished from a wet positive electrode film, which is manufactured by mixing the constituent components with a processing solvent and then removing a part or all of the processing solvent by drying.

### [Positive electrode active material layer: Others]

The thickness of the positive electrode active material layer 12 may be, for example, 50 to 500 µm, 50 to 400 µm, 50 to 300 µm, or 50 to 250 µm.

As the thickness of the positive electrode active material layer 12 is within the ranges above, the positive electrode 10 and the all-solid-state secondary battery 1 that include the positive electrode active material layer 12 may provide increased energy density, improved thermal stability, and improved charge/discharge characteristics at the same time.

### [Positive electrode current collector]

The positive electrode current collector 11 uses, for example, a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive electrode current collector 11 may be omitted. The thickness of the positive electrode current collector 11 is, for example, 1 µm to 100 µm, 1 µm to 50 µm, 5 µm to 25 µm, or 10 µm to 20 µm.

The positive electrode current collector 11 may include, for example, a base film and a metal layer arranged on one side or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. As the base film includes an insulating thermoplastic polymer, the base film becomes softened or liquefied in the event of a short circuit, thereby suppressing a sudden increase in current by cutting off battery operation. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or alloys thereof. The metal layer may act as an electrochemical fuse, being cut-off in the event of overcurrent to perform a short circuit prevention function. By adjusting the thickness of the metal layer, a limit current and a maximum current may be adjusted. The metal layer may be plated or deposited on the base film. As the thickness of the metal layer decreases, the limit current and/or the maximum current of the positive electrode current collector 11 decreases, thereby improving the stability of an all-solid-state secondary battery upon a short circuit. A lead tab may be added on the metal layer for connection to the outside. The lead tab may be welded to the metal layer or to a metal layer/base film laminate, by ultrasonic welding, laser welding, spot welding, or the like. During welding, the base film and/or the metal layer may melt such that the metal layer may be electrically connected to the lead tab. To achieve more robust welding between the metal layer and the lead tab, a metal chip may be added between the metal layer and the lead tab. The metal chip may be a thin piece of the same material as the metal of the metal layer. The metal chip may be, for example, a metal foil, a metal mesh, or the like. The metal chip may be, for example, an aluminum foil, a copper foil, an SUS foil, or the like. By arranging the metal chip on the metal layer and then welding it to the lead tab, the lead tab may be welded to a metal chip/metal layer laminate or a metal chip/metal layer/base film laminate. During welding, the base film, the metal layer, and/or the metal chip may melt such that the metal layer or the metal layer/metal chip laminate may be electrically connected to the lead tab. A metal chip and/or a lead tab may be added to a portion on the metal layer. The thickness of the base film may be, for example, 1 to 50 µm, 1.5 to 50 µm, 1.5 to 40 µm, or 1 to 30 µm. As the thickness of the base film is within the ranges above, the weight of an electrode assembly may be reduced more effectively. The melting point of the base film may be, for example, 100 to 300 °C, 100 to 250 °C, or 100 to 200 °C. As the melting point of the base film is within the ranges above, the base film may be melted during the process of welding the lead tab, and may accordingly be easily bonded to the lead tab. To improve the adhesion between the base film and the metal layer, a surface treatment such as corona treatment may be performed on the base film. The thickness of the metal layer may be, for example, 0.01 to 3 µm, 0.1 to 3 µm, 0.1 to 2 µm, or 0.1 to 1 µm. As the thickness of the metal layer is within the ranges above, the stability of an electrode assembly may be ensured while maintaining the conductivity. The thickness of the metal piece may be, for example, 2 to 10 µm, 2 to 7 µm, or 4 to 6 µm. As the thickness of the metal piece is within the ranges above, the connection between the metal layer and the lead tab may be achieved more easily. As the positive electrode current collector 11 has such a structure, the weight of the positive electrode 10 may be reduced, and consequently, the energy density of the positive electrode 10 and a lithium battery may be improved.

### [First inactive member]

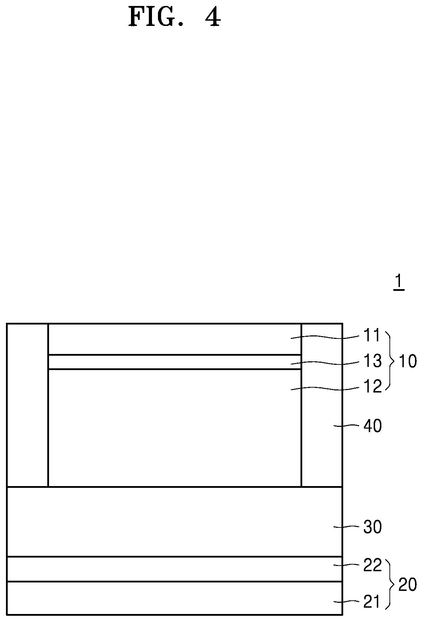

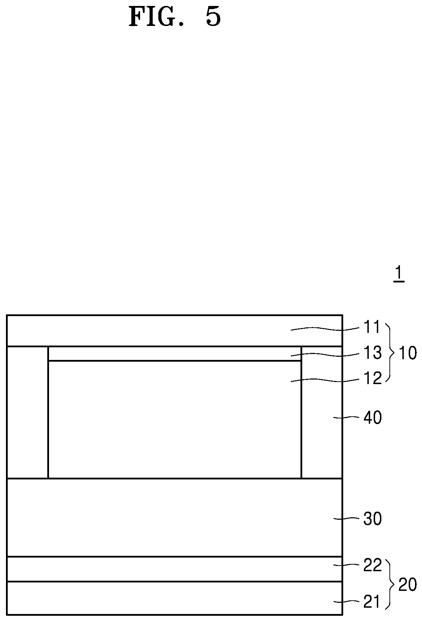

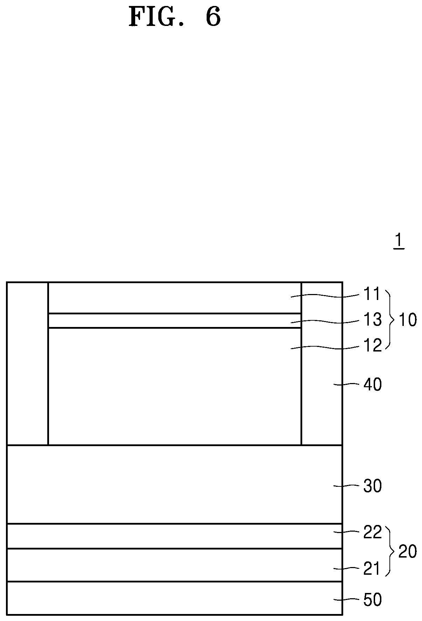

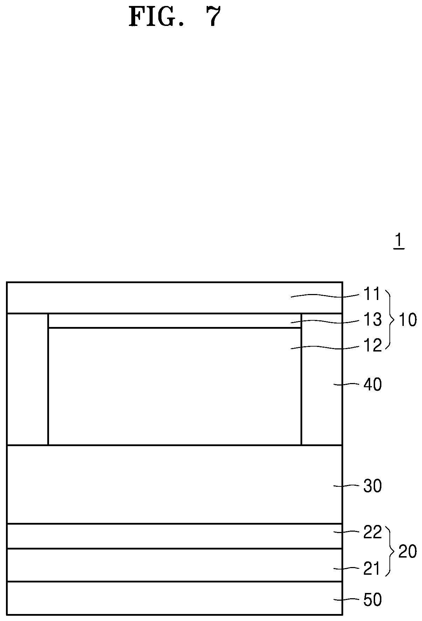

Referring to FIGS. 4 to 7, the positive electrode 10 includes the positive electrode current collector 11 and the positive electrode active material layer 12 arranged on one side of the positive electrode current collector 11. A first inactive member 40 is arranged on one side surface of the positive electrode 10. Referring to FIGS. 4 and 6, the first inactive member 40 is arranged on one side surface of the positive electrode active material layer 12 and one side surface of the positive electrode current collector 11. Referring to FIGS. 5 and 7, the first inactive member 40 is arranged on one side surface of the positive electrode active material layer 12 and is arranged between the electrolyte layer 30 and the positive electrode current collector 11 facing the electrolyte layer 30. Here, the first inactive member 40 is not arranged on one side surface of the positive electrode current collector 11. The electrolyte layer 30 may be, for example, a solid electrolyte layer.

By including the first inactive member 40, cracking of the electrolyte layer 30 during manufacturing of the all-solid-state secondary battery 1 and/or during charge/discharge is prevented, thereby improving the cycle characteristics of the all-solid-state secondary battery 1. In the all-solid-state secondary battery 1 that does not include the first inactive member 40, non-uniform pressure is applied to the electrolyte layer 30 in contact with the positive electrode 10 during manufacturing of the all-solid-state secondary battery 1 and/or during charge/discharge, thereby causing cracks in the electrolyte layer 30, and the likelihood of a short circuit occurring due to the growth of lithium metal through the cracks is increased.

In the all-solid-state secondary battery 1, the thickness of the first inactive member 40 is greater than or equal to the thickness of the positive electrode active material layer 12. Alternatively, in the all-solid-state secondary battery 1, the thickness of the first inactive member 40 is substantially equal to the thickness of the positive electrode 10. As the thickness of the first inactive member 40 is equal to the thickness of the positive electrode 10, uniform pressure is applied between the positive electrode 10 and the electrolyte layer 30, and the positive electrode 10 and the electrolyte layer 30 are sufficiently in close contact with each other, so that the interfacial resistance between the positive electrode 10 and the electrolyte layer 30 may be reduced. In addition, as the electrolyte layer 30 is sufficiently sintered during the pressure-based manufacturing process of the all-solid-state secondary battery 1, the internal resistance of the electrolyte layer 30 and the all-solid-state secondary battery 1 including the same is reduced.

The first inactive member 40 surrounds the side surface of the positive electrode 10 and is in contact with the electrolyte layer 30. As the first inactive member 40 surrounds the side surface of the positive electrode 10 and is in contact with the electrolyte layer 30, cracking of the electrolyte layer 30 caused by a pressure difference during a pressing process in the region of the electrolyte layer 30 not in contact with the positive electrode 10 may be effectively suppressed. The first inactive member 40 surrounds the side surface of the positive electrode 10 and is separated from a negative electrode 20, more specifically from a first negative electrode active material layer 22. The first inactive member 40 surrounds the side surface of the positive electrode 10, is in contact with the electrolyte layer 30, and is separated from the negative electrode 20. Therefore, the likelihood of a short circuit occurring due to physical contact between the positive electrode 10 and the first negative electrode active material layer 22, or a short circuit occurring due to overcharging of Li or the like, is suppressed. For example, the first inactive member 40 is arranged on one side surface of the positive electrode active material layer 12 and simultaneously arranged on one side surface of the positive electrode current collector 11, thereby more effectively suppressing the possibility of a short circuit occurring due to contact between the positive electrode current collector 11 and the negative electrode 20.

Referring to FIGS. 4 to 7, the first inactive member 40 extends from one side surface of the positive electrode 10 to the terminal end of the electrolyte layer 30. As the first inactive member 40 extends to the terminal end of the electrolyte layer 30, cracking occurring at the terminal end of the electrolyte layer 30 may be suppressed. The terminal end of the electrolyte layer 30 is the outermost portion in contact with the side surface of the electrolyte layer 30. The first inactive member 40 extends to the outermost portion in contact with the side surface of the electrolyte layer 30. The first inactive member 40 is separated from the negative electrode 20, more specifically from the first negative electrode active material layer 22. The first inactive member 40 extends to the terminal end of the electrolyte layer 30, but is not in contact with the negative electrode 20. The first inactive member 40 fills, for example, a space extending from one side of the positive electrode 10 to the terminal end of the electrolyte layer 30.

Referring to FIGS. 4 to 7, the width of the first inactive member 40 extending from one side of the positive electrode 10 to the terminal end of the electrolyte layer 30 is, for example, 1 to 30 %, 1 to 25 %, 1 to 20 %, 1 to 15 %, 1 to 10 %, or 1 to 5 %, of the width between one side of the positive electrode 10 and the other side opposite to the one side. If the width of the first inactive member 40 is excessively large, the energy density of the all-solid-state secondary battery 1 is reduced. If the width of the first inactive member 40 is excessively small, the effect of disposing the first inactive member 40 is negligible.

The area of the positive electrode 10 is smaller than the area of the electrolyte layer 30 in contact with the positive electrode 10. The first inactive member 40 is disposed surrounding the side surfaces of the positive electrode 10 to compensate for the difference in area between the positive electrode 10 and the electrolyte layer 30. By having the area of the first inactive member 40 compensate for the difference between the area of the positive electrode 10 and the area of the electrolyte layer 30, cracking of the electrolyte layer 30 caused by pressure differences during the pressing process is effectively suppressed. For example, the sum of the area of the positive electrode 10 and the area of the first inactive member 40 is equal to the area of the electrolyte layer 30. The electrolyte layer 30 may be, for example, a solid electrolyte layer.

The area of the positive electrode 10 is, for example, less than 100 %, 99 % or less, 98 % or less, 97 % or less, 96 % or less, or 95 % or less, of the area of the electrolyte layer 30. The area of the positive electrode 10 is, for example, 50 % to less than 100 %, 50 % to 99 %, 55 % to 98 %, 60 % to 97 %, 70 % to 96 %, 80 % to 95 %, or 85 % to 95 %, of the area of the electrolyte layer 30.

If the area of the positive electrode 10 is equal to or greater than the area of the electrolyte layer 30, the likelihood of a short circuit occurring due to physical contact between the positive electrode 10 and the first negative electrode active material layer 22, or a short circuit occurring due to overcharging of lithium or the like, increases. The area of the positive electrode 10 is, for example, identical to the area of the positive electrode active material layer 12. The area of the positive electrode 10 is, for example, identical to the area of the positive electrode current collector 11.

The area of the first inert member 40 is, for example, 50 % or less, 40 % or less, 30 % or less, 20 % or less, or 10 % or less of the area of the positive electrode 10. The area of the first inert member 40 is, for example, 1 % to 50 %, 5 % to 40 %, 5 % to 30 %, 5 % to 20 %, or 5 % to 15 %, of the area of the positive electrode 10.

The area of the positive electrode 10 is smaller than the area S4 of a negative electrode current collector 21. The area of the positive electrode 10 is, for example, less than 100 %, 99 % or less, 98 % or less, 97 % or less, 96 % or less, or 95 % or less, of the area of the negative electrode current collector 21. The area of the positive electrode 10 is, for example, 50 % to less than 100 %, 50 % to 99 %, 55 % to 98 %, 60 % to 97 %, 70 % to 96 %, 80 % to 95 %, or 85 % to 95 %, of the area of the negative electrode current collector 21. The area of the negative electrode current collector 21 is, for example, identical to the area of the negative electrode 20. The area of the negative electrode current collector 21 is, for example, identical to the area of the first negative electrode active material layer 22.

In the present disclosure, "identical" area, length, width, thickness, and/or shape includes all cases of having "substantially identical" area, length, width, thickness, and/or shape, except where the area, length, width, thickness, and/or shape are intentionally made different from each other. "Identical" area, length, width, and/or thickness includes a range in which unintended differences in the area, length, width, and/or thickness of the objects being compared are, for example, less than 3 %, less than 2 %, less than 1 %, less than 0.5 %, or less than 0.1 %.

The thickness of the first inert member 40 is, for example, greater than the thickness of the first negative electrode active material layer 22. The thickness of the first negative electrode active material layer 22 is, for example, 50 % or less, 40 % or less, 30 % or less, 20 % or less, or 10 % or less of the thickness of the first inert member 40. The thickness of the first negative electrode active material layer 22 is, for example, 1 % to 50 %, 1 % to 40 %, 1 % to 30 %, 1 % to 20 %, or 1 % to 10 % of the thickness of the first inert member 40.

The first inert member 40 may be a gasket. By using a gasket as the first inert member 40, cracking of the electrolyte layer 30 caused by pressure differences during a pressing process may be effectively suppressed.

The first inert member 40 has, for example, a single-layer structure. Alternatively, although not shown in the drawings, the first inert member 40 may have a multilayer structure. In the first inert member 40 having a multilayer structure, each layer may have a different composition. The first inert member having a multilayer structure may have, for example, a two-layer structure, a three-layer structure, a four-layer structure, or a five-layer structure. The first inert member 40 having a multilayer structure may include, for example, one or more adhesive layers and one or more support layers. The adhesive layer effectively prevents, for example, separation between the positive electrode 10 and the electrolyte layer 30 caused by volume changes of the positive electrode 10 occurring during the charge/discharge process of the all-solid-state secondary battery 1, and improves the film strength of the first inert member 40 by providing adhesion between the support layer and other layers. The support layer provides support to the first inert member 40, prevents non-uniformity of pressure applied to the electrolyte layer 30 during the pressing process or the charge/discharge process, and prevents shape deformation of the all-solid-state secondary battery 1 being manufactured.

The first inert member 40 is, for example, a flame-retardant first inert member. By providing flame retardancy, the flame-retardant first inert member can prevent the possibility of thermal runaway and ignition of the all-solid-state secondary battery 1. As a result, the safety of the all-solid-state secondary battery 1 is further improved. By absorbing residual moisture within the all-solid-state secondary battery 1, the flame-retardant first inert member prevents deterioration of the all-solid-state secondary battery 1, thereby improving the lifespan characteristics of the all-solid-state secondary battery 1.

The flame-retardant first inert member includes, for example, a matrix and a filler. The matrix includes, for example, a base material and a reinforcement. The matrix includes, for example, a fibrous base material and a fibrous reinforcement. By the matrix including the base material, the matrix can have elasticity. Therefore, the matrix can effectively accommodate volume changes of the all-solid-state secondary battery 1 during charge and discharge, and may be disposed at various positions. The base material included in the matrix includes, for example, a first fibrous material. By the base material including the first fibrous material, volume changes of the positive electrode 10 occurring during the charge and discharge process of the all-solid-state secondary battery 1 may be effectively accommodated, and deformation of the first inert member 40 due to volume changes of the positive electrode 10 may be effectively suppressed. The first fibrous material is, for example, a material having an aspect ratio of 5 or more, 20 or more, or 50 or more. The first fibrous material is, for example, a material having an aspect ratio of 5 to 1000, 20 to 1000, or 50 to 1000. The first fibrous material is, for example, an insulating material. By the first fibrous material being an insulating material, short circuits between the positive electrode 10 and the negative electrode 20 caused by lithium dendrites or the like occurring during the charge and discharge process of the all-solid-state secondary battery 1 may be effectively prevented. The first fibrous material includes, for example, one or more selected from pulp fiber, insulating polymer fiber, and ion-conductive polymer fiber. The strength of the matrix is improved by the matrix including a reinforcing material. Therefore, the matrix can prevent excessive volume changes during charge and discharge of the all-solid-state secondary battery 1 and prevent deformation of the all-solid-state secondary battery. The reinforcing material included in the matrix includes, for example, a second fibrous material. By the reinforcing material including the second fibrous material, the strength of the matrix may be increased more uniformly. The second fibrous material is, for example, a material having an aspect ratio of 3 or more, 5 or more, or 10 or more. The first fibrous material is, for example, a material having an aspect ratio of 3 to 100, 5 to 100, or 10 to 100. The second fibrous material is, for example, a flame-retardant material. By the second fibrous material being a flame-retardant material, ignition caused by thermal runaway occurring during the charge and discharge process of the all-solid-state secondary battery 1 or due to external impact may be effectively suppressed. The second fibrous material is, for example, glass fiber, metal oxide fiber, ceramic fiber, or the like.

The flame-retardant first inert member includes a filler in addition to the matrix. The filler may be disposed inside the matrix, on the surface of the matrix, or both inside and on the surface. The filler is, for example, an inorganic material. The filler included in the flame-retardant first inert member is, for example, a moisture getter. The filler prevents deterioration of the all-solid-state secondary battery 1 by, for example, adsorbing moisture at a temperature below 100 °C to remove moisture remaining inside the all-solid-state secondary battery 1. In addition, if the temperature of the all-solid-state secondary battery 1 increases to 150 °C or higher due to thermal runaway occurring during the charge and discharge process of the all-solid-state secondary battery 1 or due to external impact, the filler can effectively suppress ignition of the all-solid-state secondary battery 1 by releasing the adsorbed moisture. That is, the filler is, for example, a flame retardant. The filler is, for example, a metal hydroxide having moisture adsorption properties. The metal hydroxide included in the filler is, for example, Mg(OH)₂, Fe(OH)₃, Sb(OH)₃, Sn(OH)₄, TI(OH)₃, Zr(OH)₄, Al(OH)₃, or a combination thereof. The content of the filler included in the flame-retardant first inert member is, for example, 10 to 80 parts by weight, 20 to 80 parts by weight, 30 to 80 parts by weight, 40 to 80 parts by weight, 50 to 80 parts by weight, 60 to 80 parts by weight, or 65 to 80 parts by weight, based on 100 parts by weight of the flame-retardant first inert member 40.

The flame-retardant first inert member may further include, for example, a binder. The binder may include, for example, a curable polymer or a non-curable polymer. The curable polymer is a polymer that is cured by heat and/or pressure. The curable polymer is, for example, a solid at room temperature. The flame-retardant first inert member 40 includes, for example, a thermo-compression curable film and/or a cured product thereof. The thermo-compression curable polymer is, for example, TSA-66 manufactured by Toray.

The flame-retardant first inert member may additionally include other materials in addition to the above-described substrate, reinforcing material, filler, and binder. The flame-retardant first inert member may further include at least one selected from, for example, paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) or polyethylene (PE).

The density of the substrate or the density of the reinforcing material included in the flame-retardant first inert member may be, for example, 10 % to 300 %, 10 % to 150 %, 10 % to 140 %, 10 % to 130 %, or 10 % to 120 %, of the density of the positive electrode active material included in the positive electrode active material layer 12.

The first inert member 40 is a member that does not include a material having electrochemical activity, for example, an electrode active material. The electrode active material is a material that intercalates/deintercalates lithium. The first inert member 40 is a member made of a material used in the art as a material other than the electrode active material.

### [All-solid-state secondary battery]

An all-solid-state secondary battery according to an embodiment includes: the positive electrode; the negative electrode; and the electrolyte layer arranged between the positive electrode and the negative electrode. The negative electrode includes the negative electrode current collector and the first negative electrode active material layer arranged on one side of the negative electrode current collector.

Referring to FIGS. 1 to 7, the all-solid-state secondary battery 1 includes: the positive electrode 10; the negative electrode 20; and the electrolyte layer 30 arranged between the positive electrode 10 and the negative electrode 20. The negative electrode 20 includes the negative electrode current collector 21 and the first negative electrode active material layer 22 arranged on one side of the negative electrode current collector.

### [Positive electrode]

Reference is made to the aforementioned positive electrode.

### [Negative electrode]

### [Negative electrode: Negative electrode active material]

Referring to FIGS. 1 to 7, the negative electrode 20 includes the first negative electrode active material layer 22. The first negative electrode active material layer 22 includes, for example, a negative electrode active material and a binder.

The negative electrode active material included in the first negative electrode active material layer 22 is, for example, a negative electrode material capable of forming an alloy or a compound with lithium.

The negative electrode active material included in the first negative electrode active material layer 22 has, for example, a particle form. The average particle diameter of the negative electrode active material having a particle form is, for example, 4 µm or less, 3 µm or less, 2 µm or less, 1 µm or less, 500 nm or less, 300 nm or less, or 100 nm or less. The average particle diameter of the negative electrode active material having a particle form is, for example, 10 nm to 4 µm, 10 nm to 3 µm, 10 nm to 2 µm, 10 nm to 1 µm, 10 nm to 500 nm, 10 nm to 300 nm, or 10 nm to 100 nm. As the average particle diameter of the negative electrode active material is within the ranges above, reversible absorption and/or desorption of lithium during charging and discharging may be further facilitated. The average particle diameter of the negative electrode active material is, for example, a median diameter D50 measured using a laser diffraction particle size analyzer.

The negative electrode active material included in the first negative electrode active layer 22 includes, for example, one or more selected from a carbon-based negative electrode active material and a metal- or metalloid- negative electrode active material.

The carbon-based negative electrode active material includes, for example, amorphous carbon, crystalline carbon, porous carbon, or a combination thereof.

The carbon-based negative electrode active material is, in particular, amorphous carbon. Amorphous carbon includes, for example, carbon black (CB), acetylene black (AB), furnace black (FB), ketjen black (KB), graphene, and the like, but is not necessarily limited thereto, and any material classified as amorphous carbon in the art may be used. Amorphous carbon is carbon that has no crystallinity or very low crystallinity, and is distinguished from crystalline carbon or graphite-based carbon.

The carbon-based negative electrode active material may be, for example, porous carbon. The pore volume included in the porous carbon is, for example, 0.1 cc/g to 10.0 cc/g, 0.5 cc/g to 5 cc/g, or 0.1 cc/g to 1 cc/g. The average pore diameter included in the porous carbon is, for example, 1 nm to 50 nm, 1 nm to 30 nm, or 1 nm to 10 nm. The BET specific surface area of the porous carbon is, for example, 100 m²/g to 3000 m²/g.

The metal- or metalloid- negative electrode active material includes one or more selected from the group consisting of gold (Au), platinum (Pt), palladium (Pd), silicon (Si), silver (Ag), aluminum (Al), bismuth (Bi), tin (Sn), and zinc (Zn), but is not necessarily limited thereto, and any material used as a metal- or metalloid- negative electrode active material that forms an alloy or compound with lithium in the art may be used. For example, nickel (Ni) does not form an alloy with lithium and is therefore not a metal negative electrode active material.

The first negative electrode active material layer 22 includes one type of negative electrode active material among these negative electrode active materials, or includes a mixture of a plurality of different negative electrode active materials. For example, the first negative electrode active material layer 22 includes only amorphous carbon, or includes one or more selected from the group consisting of gold (Au), platinum (Pt), palladium (Pd), silicon (Si), silver (Ag), aluminum (Al), bismuth (Bi), tin (Sn), and zinc (Zn). Alternatively, the first negative electrode active material layer 22 includes a mixture of amorphous carbon and one or more selected from the group consisting of gold (Au), platinum (Pt), palladium (Pd), silicon (Si), silver (Ag), aluminum (Al), bismuth (Bi), tin (Sn), and zinc (Zn). The mixing ratio of the mixture of amorphous carbon and gold or the like is, as a weight ratio, for example, 99:1 to 1:99, 10:1 to 1:2, 5:1 to 1:1, or 4:1 to 2:1, but is not necessarily limited to these ranges, and is selected according to the required characteristics of the all-solid-state secondary battery 1. As the negative electrode active material has such a composition, the cycle characteristics of the all-solid-state secondary battery 1 are further improved.

The negative electrode active material included in the first negative electrode active material layer 22 includes, for example, a mixture of first particles composed of amorphous carbon and second particles composed of a metal or metalloid. The metal or metalloid includes, for example, gold (Au), platinum (Pt), palladium (Pd), silicon (Si), silver (Ag), aluminum (Al), bismuth (Bi), tin (Sn), and zinc (Zn). The metalloid is alternatively a semiconductor. The content of the second particles is 1 to 99 wt%, 1 to 60 wt%, 8 to 60 wt%, 10 to 50 wt%, 15 to 40 wt%, or 20 to 30 wt%, based on the total weight of the mixture. By having the second particles with a content in such a range, for example, the cycle characteristics of the all-solid-state secondary battery 1 are further improved.

Alternatively, the first negative electrode active material layer 22 includes a composite negative electrode active material. The composite negative electrode active material may include, for example, a carbon-based support and a metal-based negative electrode active material supported on the carbon-based support. By having the composite negative electrode active material with such a structure, localization of the metal-based negative electrode active material within the first negative electrode active material layer is prevented and a uniform distribution may be obtained. As a result, the cycle characteristics of the all-solid-state secondary battery 1 including the first negative electrode active material layer 22 are further improved.

The metal-based negative electrode active material supported on the carbon-based support includes, for example, a metal, a metal oxide, a composite of a metal and a metal oxide, or a combination thereof. The metal includes, for example, gold (Au), platinum (Pt), palladium (Pd), silicon (Si), silver (Ag), aluminum (Al), bismuth (Bi), tin (Sn), tellurium (Te), and zinc (Zn). The metal oxide includes, for example, gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include, for example, AuₓO_{y} (0<x≤2, 0<y≤3), PtₓO_{y} (0<x≤1, 0<y≤2), PdₓO_{y} (0<x≤1, 0<y≤1), SiₓO_{y} (0<x≤1, 0<y≤2), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1), or a combination thereof. The composite of a metal and a metal oxide may include, for example, a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Si and SiₓO_{y} (0<x≤1, 0<y≤2), a composite of AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a composite of Te and TeₓO_{y} (0<x≤1, 0<y≤3), a composite of Zn and ZnₓO_{y} (0<x≤1, 0<y≤1), or a combination thereof.

The carbon-based support is, for example, amorphous carbon. Amorphous carbon includes, for example, carbon black (CB), acetylene black (AB), furnace black (FB), ketjen black (KB), graphene, activated carbon, carbon nanofiber (CNF), carbon nanotube (CNT), and the like, but is not necessarily limited thereto, and any material classified as amorphous carbon in the art may be used. Amorphous carbon is carbon that has no crystallinity or very low crystallinity, and is distinguished from crystalline carbon or graphite-based carbon. The carbonaceous material is, for example, a carbon-based negative electrode active material.

The composite negative electrode active material has, for example, a particle form. The particle size of the composite negative electrode active material having a particle form is, for example, 10 nm to 4 µm, 10 nm to 1 µm, 10 nm to 500 nm, 10 nm to 200 nm, or 10 nm to 100 nm. As the composite negative electrode active material has a particle size within such a range, reversible absorbing and/or desorbing of lithium during charging and discharging may be further facilitated. The metal-based negative electrode active material supported on the support may have, for example, a particle form. The particle size of the metal-based negative electrode active material may be, for example, 1 nm to 200 nm, 1 nm to 150 nm, 5 nm to 100 nm, or 10 nm to 50 nm. The carbon-based support may have, for example, a particle form. The particle size of the carbon-based support may be, for example, 10 nm to 2 µm, 10 nm to 1 µm, 10 nm to 500 nm, 10 nm to 200 nm, or 10 nm to 100 nm. As the particle size of the carbon-based support is within the ranges above, the carbon-based support may be more uniformly distributed within the first negative electrode active material layer. The carbon-based support may be, for example, nanoparticles having a particle size of 500 nm or less. The particle size of the composite negative electrode active material, the particle size of the metal-based negative electrode active material, and the particle size of the carbon-based support are, for example, average particle sizes. The average particle size is, for example, a median diameter D50 measured using a laser particle size analyzer. Alternatively, the average particle size may be, for example, automatically determined using software from an electron microscope image or manually determined according to a manual.

### [Negative electrode: Binder]

The binder included in the first negative electrode active material layer 22 may be, for example, SBR, polytetrafluoroethylene, polyvinylidene fluoride, polyethylene, vinylidene fluoride/hexafluoropropylene copolymer, polyacrylonitrile, polymethyl methacrylate, or the like, but is not necessarily limited thereto. Any material used as a binder in the art may be used. The binder may be composed of a single binder or a plurality of different binders.

As the first negative electrode active material layer 22 includes the binder, the first negative electrode active material layer 22 is stabilized on the negative electrode current collector 21. In addition, cracking of the first negative electrode active material layer 22 is suppressed despite volume changes and/or relative positional changes of the first negative electrode active material layer 22 during charge and discharge processes. For example, if the first negative electrode active material layer 22 does not include a binder, the first negative electrode active material layer 22 may be easily separated from the negative electrode current collector 21. In the portion where the negative electrode current collector 21 is exposed due to the detachment of the first negative electrode active material layer 22 from the negative electrode current collector 21, the likelihood of a short circuit occurring increases as the negative electrode current collector 21 comes into contact with the electrolyte layer 30. The first negative electrode active material layer 22 is produced, for example, by applying a slurry in which materials constituting the first negative electrode active material layer 22 are dispersed onto the negative electrode current collector 21 and then drying it. As the first negative electrode active material layer 22 includes the binder, stable dispersion of the negative electrode active material in the slurry may be achieved. For example, if the slurry is applied onto the negative electrode current collector 21 by a screen printing method, clogging of the screen (for example, clogging caused by aggregates of the negative electrode active material) may be suppressed.

### [Negative electrode: Other additives]

The first negative electrode active material layer 22 may further include additives, such as fillers, coating agents, dispersants, ion conductivity aids, and the like, used in conventional all-solid-state secondary batteries 1.

### [Negative electrode: First negative electrode active material layer]

The ratio (B/A) of the initial charge capacity (B) of the first negative electrode active material layer 22 to the initial charge capacity (A) of the positive electrode active material layer is 0.005 to 0.45. The initial charge capacity of the positive electrode active material layer 12 is determined by charging from the first open circuit voltage (1^{st} open circuit voltage) to the maximum charging voltage with respect to Li/Li+. The initial charge capacity of the first negative electrode active material layer 22 is determined by charging from the second open circuit voltage (2^{nd} open circuit voltage) to 0.01 V with respect to Li/Li+.

The maximum charging voltage is determined according to the type of positive electrode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li₂S or a Li₂S composite may be 2.5 V with respect to Li/Li+. For example, the maximum charging voltage of Li₂S or a Li₂S composite may be 3.0 V with respect to Li/Li+. The ratio (B/A) of the initial charge capacity (B) of the first negative electrode active material layer 22 to the initial charge capacity (A) of the positive electrode active material layer is, for example, 0.01 to 0.45, 0.01 to 0.4, 0.01 to 0.3, 0.01 to 0.2, or 0.05 to 0.1. The initial charge capacity (mAh) of the positive electrode active material layer 12 is obtained by multiplying the charge specific capacity (mAh/g) of the positive electrode active material by the mass (g) of the positive electrode active material in the positive electrode active material layer 12. If multiple types of positive electrode active materials are used, the charge specific capacity × mass value is calculated for each positive electrode active material, and the sum of these values is the initial charge capacity of the positive electrode active material layer 12. The initial charge capacity of the first negative electrode active material layer 22 is also calculated in the same manner. The initial charge capacity of the first negative electrode active material layer 22 is obtained by multiplying the charge specific capacity (mAh/g) of the negative electrode active material by the mass of the negative electrode active material in the first negative electrode active material layer 22. If multiple types of negative electrode active materials are used, the charge specific capacity × mass value is calculated for each negative electrode active material, and the sum of these values is the initial charge capacity of the first negative electrode active material layer 22. The charge specific capacity of each of the positive electrode active material and the negative electrode active material may be measured using an all-solid-state half-cell with lithium metal as the counter electrode.

The initial charge capacity of each of the positive electrode active material layer 12 and the first negative electrode active material layer 22 may be directly measured using an all-solid-state half-cell at a constant current density, for example, 0.1 mA/cm². For the positive electrode, the measurement may be performed by charging from the first open circuit voltage (OCV) to the maximum charge voltage, for example, 3.0 V (vs. Li/Li+), as the operating voltage. For the negative electrode, the measurement may be performed by charging from the second open circuit voltage (OCV) to an operating voltage of, for example, 0.01 V with respect to the negative electrode, for example, lithium metal. For example, an all-solid-state half-cell having a positive electrode active material layer is charged at a constant current of 0.1 mA/cm² from the first open circuit voltage to 3.0 V, and an all-solid-state half-cell having a first negative electrode active material layer may be charged at a constant current of 0.1 mA/cm² from the second open circuit voltage to 0.01 V. The current density during constant current charging may be, for example, 0.2 mA/cm² or 0.5 mA/cm². The all-solid-state half-cell having a positive electrode active material layer may be charged from the first open circuit voltage to, for example, 2.5 V, 2.0 V, 3.5 V, or 4.0 V. The maximum charge voltage of the positive electrode active material layer may be determined by the maximum voltage of a battery satisfying the safety conditions in accordance with JISC8712:2015 of the Japanese Standards Association.

If the initial charge capacity of the first negative electrode active material layer 22 is excessively small, the thickness of the first negative electrode active material layer 22 becomes very thin, so that lithium dendrites formed between the first negative electrode active material layer 22 and the negative electrode current collector 21 during repeated charge and discharge processes collapse the first negative electrode active material layer 22, making it difficult to improve the cycle characteristics of the all-solid-state secondary battery 1. If the charge capacity of the first negative electrode active material layer 22 increases excessively, the energy density of the all-solid-state secondary battery 1 decreases and the internal resistance of the all-solid-state secondary battery 1 due to the first negative electrode active material layer 22 increases, making it difficult to improve the cycle characteristics of the all-solid-state secondary battery 1.

The thickness of the first negative electrode active material layer 22 is, for example, 50 % or less, 40 % or less, 30 % or less, 20 % or less, 10 % or less, or 5 % or less, of the thickness of the positive electrode active material layer 12. The thickness of the first negative electrode active material layer 22 is, for example, 1 to 50 %, 1 to 40 %, 1 to 30 %, 1 to 20 %, 1 to 10 %, or 1 to 5 %, of the thickness of the positive electrode active material layer 12. The thickness of the first negative electrode active material layer 22 is, for example, 1 µm to 20 µm, 2 µm to 15 µm, or 3 µm to 10 µm. If the thickness of the first negative electrode active material layer 22 is excessively thin, lithium dendrites formed between the first negative electrode active material layer 22 and the negative electrode current collector 21 collapse the first negative electrode active material layer 22, making it difficult to improve the cycle characteristics of the all-solid-state secondary battery 1. If the thickness of the first negative electrode active material layer 22 increases excessively, the energy density of the all-solid-state secondary battery 1 decreases and the internal resistance of the all-solid-state secondary battery 1 due to the first negative electrode active material layer 22 increases, making it difficult to improve the cycle characteristics of the all-solid-state secondary battery 1. As the thickness of the first negative electrode active material layer 22 decreases, for example, the initial charge capacity of the first negative electrode active material layer 22 also decreases.

### [Negative electrode: Second negative electrode active material layer]

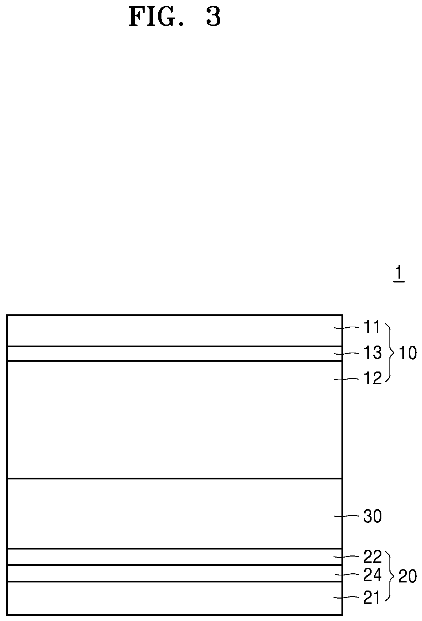

Referring to FIG. 3, the all-solid-state secondary battery 1, after being charged, further includes, for example, a second negative electrode active material layer 24 arranged between the negative electrode current collector 21 and the first negative electrode active material layer 22. The second negative electrode active material layer 24 is a metal layer containing lithium or a lithium alloy. The metal layer contains lithium or a lithium alloy. Therefore, since the second negative electrode active material layer 24 is a metal layer containing lithium, it acts as, for example, a lithium reservoir. The lithium alloy includes, for example, a Li-Al alloy, a Li-Sn alloy, a Li-In alloy, a Li-Ag alloy, a Li-Au alloy, a Li-Zn alloy, a Li-Ge alloy, a Li-Si alloy, and the like, but is not limited thereto, and any alloy used as a lithium alloy in the art may be used. The second negative electrode active material layer 24 may be made of one of these alloys or lithium, or may be made of several types of alloys. The second negative electrode active material layer 24 is, for example, a plated layer. The second negative electrode active material layer 24 is deposited between the first negative electrode active material layer 22 and the negative electrode current collector 21, for example, during the charging process of the all-solid-state secondary battery 1.

The thickness of the second negative electrode active material layer 24 is not particularly limited, but is, for example, 1 µm to 500 µm, 1 µm to 200 µm, 1 µm to 150 µm, 1 µm to 100 µm, or 1 µm to 50 µm. If the thickness of the second negative electrode active material layer 24 is too thin, it is difficult for the second negative electrode active material layer 24 to serve as a lithium reservoir. If the thickness of the second negative electrode active material layer 24 is too thick, the mass and volume of the all-solid-state secondary battery 1 increase, and the cycle characteristics of the all-solid-state secondary battery 1 may rather deteriorate.

Alternatively, in the all-solid-state secondary battery 1, the second negative electrode active material layer 24 may be arranged between the negative electrode current collector 21 and the first negative electrode active material layer 22, for example, before assembly of the all-solid-state secondary battery 1. As the second negative electrode active material layer 24 is arranged between the negative electrode current collector 21 and the first negative electrode active material layer 22 before assembly of the all-solid-state secondary battery 1, the second negative electrode active material layer 24 acts as a lithium reservoir because it is a metal layer containing lithium. For example, a lithium foil may be arranged between the negative electrode current collector 21 and the first negative electrode active material layer 22 before assembly of the all-solid-state secondary battery 1.

As the second negative electrode active material layer 24 is deposited by charging after assembly of the all-solid-state secondary battery 1, the energy density of the all-solid-state secondary battery 1 increases because the second negative electrode active material layer 24 is not included at the time of assembly of the all-solid-state secondary battery 1. During charging of the all-solid-state secondary battery 1, charging is performed in excess of the charging capacity of the first negative electrode active material layer 22. That is, the first negative electrode active material layer 22 is overcharged. In the initial stage of charging, lithium is intercalated into the first negative electrode active material layer 22. The negative electrode active material contained in the first negative electrode active material layer 22 forms an alloy or compound with lithium ions transferred from the positive electrode 10. If charging is performed in excess of the capacity of the first negative electrode active material layer 22, lithium is deposited at, for example, the rear side of the first negative electrode active material layer 22, that is, between the negative electrode current collector 21 and the first negative electrode active material layer 22, and a metal layer corresponding to the second negative electrode active material layer 24 is formed by the deposited lithium. The second negative electrode active material layer 24 is a metal layer composed mainly of lithium (i.e., metallic lithium). Such results are obtained, for example, by the negative electrode active material included in the first negative electrode active material layer 22 containing a material that forms an alloy or compound with lithium. During discharge, lithium in the first negative electrode active material layer 22 and the second negative electrode active material layer 24, that is, the metal layer, is ionized and moves toward the positive electrode 10. Therefore, it is possible to use lithium as a negative electrode active material in the all-solid-state secondary battery 1. In addition, since the first negative electrode active material layer 22 covers the second negative electrode active material layer 24, it serves as a protective layer for the second negative electrode active material layer 24, that is, the metal layer, while also suppressing the deposition and growth of lithium dendrites. Therefore, short circuits and capacity degradation of the all-solid-state secondary battery 1 are suppressed, and as a result, the cycle characteristics of the all-solid-state secondary battery 1 are improved. In addition, if the second negative electrode active material layer 24 is disposed by charging after assembly of the all-solid-state secondary battery 1, the negative electrode 20, that is, the negative electrode current collector 21, the first negative electrode active material layer 22, and the region therebetween, is a Li-free region that does not contain lithium (Li) in the initial state of the all-solid-state secondary battery 1 or in the state after complete discharge.

### [Negative electrode: Negative electrode current collector]

The negative electrode current collector 21 is composed of, for example, a material that does not react with lithium, that is, a material that forms neither alloys nor compounds. The materials constituting the negative electrode current collector 21 include, for example, copper (Cu), stainless steel, titanium (Ti), iron (Fe), cobalt (Co), and nickel (Ni), but are not necessarily limited thereto, and any material used as an electrode current collector in the art may be used. The negative electrode current collector 21 may be composed of one of the aforementioned metals, or may be composed of an alloy or a cladding material of two or more metals. The negative electrode current collector 21 is, for example, in the form of a plate or foil.

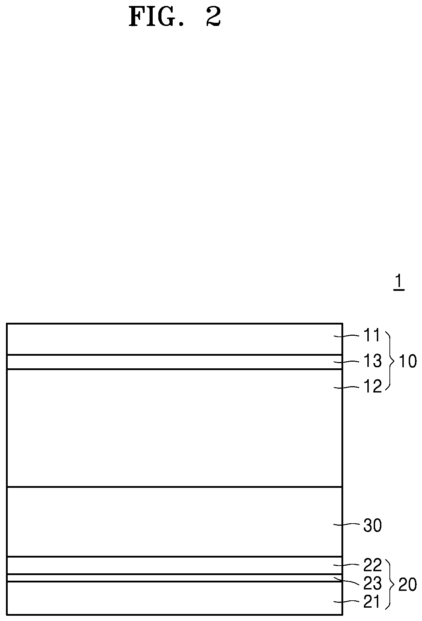

Referring to FIG. 2, the all-solid-state secondary battery 1 may further include a thin film 23 containing an element capable of forming an alloy with lithium on one side of the negative electrode current collector 21. The thin film 23 is arranged between the negative electrode current collector 21 and the first negative electrode active material layer 22. The thin film 23 contains, for example, an element capable of forming an alloy with lithium. The elements capable of forming an alloy with lithium include, for example, gold, silver, zinc, tin, indium, silicon, aluminum, and bismuth, but are not necessarily limited thereto, and any element capable of forming an alloy with lithium in the art may be used. The thin film 23 is composed of one of these metals, or is composed of an alloy of several types of metals. By disposing the thin film 23 on one side of the negative electrode current collector 21, for example, the deposition morphology of the second negative electrode active material layer 24 deposited between the thin film 23 and the first negative electrode active material layer 22 is further planarized, and the cycle characteristics of the all-solid-state secondary battery 1 may be further improved.

The thickness of the thin film 23 is, for example, 1 nm to 800 nm, 10 nm to 700 nm, 50 nm to 600 nm, or 100 nm to 500 nm. As the thickness of the thin film 23 is less than 1 nm, the function provided by the thin film 23 may be difficult to achieve. If the thickness of the thin film 23 is excessively large, the thin film 23 itself may absorb lithium, reducing the amount of lithium deposited at the negative electrode, thereby lowering the energy density of the all-solid-state battery and deteriorating the cycle characteristics of the all-solid-state secondary battery 1. The thin film 23 may be arranged on the negative electrode current collector 21 by, for example, vacuum deposition, sputtering, plating, or the like, but is not necessarily limited to these methods, and any method capable of forming the thin film 23 in the art may be used.

Although not shown in the drawings, the negative electrode current collector 21 may include, for example, a base film and a metal layer arranged on one or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. By including an insulating thermoplastic polymer in the base film, the base film may soften or liquefy upon occurrence of a short circuit, thereby cutting off battery operation and suppressing a rapid increase in current. The metal layer may include, for example, copper (Cu), stainless steel, titanium (Ti), iron (Fe), cobalt (Co), nickel (Ni), or alloys thereof. The negative electrode current collector 21 may additionally include a metal chip and/or a lead tab. For more specific details regarding the base film, metal layer, metal chip, and lead tab of the negative electrode current collector 21, refer to the above-described positive electrode current collector 11. By having the negative electrode current collector 21 with such a structure, the weight of the negative electrode may be reduced, and consequently, the energy density of the negative electrode and the lithium battery may be improved.

### [Negative electrode: Second inactive member]

Referring to FIGS. 6 and 7, the all-solid-state secondary battery 1 further includes a second inactive member 50 arranged on the other side of the negative electrode current collector 21.

The second inactive member 50 is distinguished from the first inactive member 40 in that it has conductivity by additionally including a conductive material. The second inactive member 50 is, for example, a conductive flame-retardant inactive member.

The conductive material is, for example, graphite, carbon black, acetylene black, ketjen black, Denka black, carbon fiber, carbon nanotube (CNT), graphene, metal fiber, metal powder, or the like. The electronic conductivity of the second inactive member 50 at 25 °C and 1 atm is, for example, 100 times or more, 1,000 times or more, or 10,000 times or more the electronic conductivity of the first inactive member 40 at 25 °C and 1 atm.

The second inactive member 50 includes, for example, a matrix, a filler, and a conductive material. The matrix includes, for example, a base material and a reinforcing material. The second inactive member 50 may further include a filler, a binder, and the like. The content of the conductive material included in the second inactive member 50 is, for example, 1 to 30 parts by weight, 1 to 20 parts by weight, 1 to 15 parts by weight, 1 to 10 parts by weight, 5 to 40 parts by weight, 5 to 30 parts by weight, or 5 to 35 parts by weight based on 100 parts by weight of the second inactive member 50.

The elastic modulus (Young's modulus) of the second inactive member 50 is, for example, smaller than the elastic modulus of the negative electrode current collector 21. The elastic modulus (Young's modulus) of the second inactive member 50 is, for example, 50 % or less, 30 % or less, 10 % or less, or 5% or less, of the elastic modulus of the negative electrode current collector 21. The elastic modulus (Young's modulus) of the second inactive member 50 is, for example, 0.01 % to 50 %, 0.1 % to 30 %, 0.1 % to 10 %, or 1 % to 5 %, of the elastic modulus of the negative electrode current collector 21. The elastic modulus of the second inactive member 50 is, for example, 100 MPa or less, 50 MPa or less, 30 MPa or less, 10 MPa or less, or 5 MPa or less. The elastic modulus of the second inactive member 50 is, for example, 0.01 to 100 MPa, 0.1 to 50 MPa, 0.1 to 30 MPa, 0.1 to 10 MPa, or 1 to 5 MPa.

As the second inactive member 50 has conductivity, it may serve as a negative electrode current collector 50. In addition, since the second inactive member 50 has a lower elastic modulus than the negative electrode current collector 21, it can more effectively accommodate the volume change of the negative electrode 20 during charging and discharging of the all-solid-state secondary battery 1. As a result, the second inactive member 50 can effectively relieve the internal stress caused by the volume change of the all-solid-state secondary battery 1 during charging and discharging, thereby improving the cycle characteristics of the all-solid-state secondary battery 1.

The shape of the second inactive member 50 is not particularly limited and may be selected according to the shape of the all-solid-state secondary battery 1. The second inactive member 50 may be, for example, in the form of a sheet, a rod, or a gasket. The second inactive member 50 may be disposed, for example, on one side or both sides of a single all-solid-state secondary battery 1. The second inactive member 50 may be disposed, for example, between a plurality of stacked all-solid-state secondary batteries 1. The second inactive member 50 may be disposed, for example, between each of the plurality of stacked all-solid-state secondary batteries 1, and on the topmost surface and/or bottommost surface.

### [Electrolyte layer]

### [Electrolyte layer: Electrolyte]

Referring to FIGS. 1 to 7, the electrolyte layer 30 includes an electrolyte arranged between the positive electrode 10 and the negative electrode 20. The electrolyte may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

The solid electrolyte is, for example, a sulfide-based solid electrolyte. The sulfide-based solid electrolyte may be selected from the sulfide-based solid electrolytes used in the interlayer described above.

The oxide-based solid electrolyte may be, for example, Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y} Ti_{y}O₃ (PLZT)(0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y} (PO₄)₃(0<x<2, 0<y<3), LiₓAl_{y}Ti_{z} (PO₄)₃ (0<x<2, 0<y<1, 0<z<3), Li_{1+x+y} (Al, Ga)ₓ(Ti, Ge)₂₋ₓSi_{y}P_{3-y}O₁₂(0≤x≤1, 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, 0≤x≤10), or a combination thereof. The oxide-based solid electrolyte is produced, for example, by a sintering method or the like.

The oxide-based solid electrolyte is, for example, a garnet-type solid electrolyte selected from Li₇La₃Zr₂O₁₂(LLZO) and Li₃₊ₓLa₃Zr₂₋ₐMₐO₁₂ (M doped LLZO, M=Ga, W, Nb, Ta, or Al, 0<a<2, 0≤x≤10).

The polymer solid electrolyte may be selected from, for example, the polymer solid electrolytes used in the composite positive electrode active material.

The gel electrolyte is, for example, a polymer gel electrolyte. The gel electrolyte may, for example, have a gel state without containing a polymer.

The polymer gel electrolyte may be selected from, for example, the polymer gel electrolytes used in the composite positive electrode active material.

### [Electrolyte layer: Binder]

The electrolyte layer 30 may include, for example, a binder. The binder included in the electrolyte layer 30 may be, for example, SBR, polytetrafluoroethylene, polyvinylidene fluoride, polyethylene, or the like, but is not limited thereto, and any material used as a binder in the art may be used. The binder of the electrolyte layer 30 may be the same as or different from the binder included in the positive electrode active material layer 12 and the negative electrode active material layer 22. The binder may be omitted.

The content of the binder included in the electrolyte layer 30 is, for example, 0.1 to 10 wt%, 0.1 to 5 wt%, 0.1 to 3 wt%, 0.1 to 1 wt%, 0 to 0.5 wt%, or 0 to 0.1 wt%, based on the total weight of the electrolyte layer 30.

### Mode for the Invention

The inventive concept will be described in more detail through Examples and Comparative Examples below. However, Examples are provided to illustrate the inventive concept, and the scope of the inventive concept is not limited thereto.

### (Preparation of composite positive electrode active material)

### Preparation Example 1: Li₂S-LiI-CNF composite

Li₂S and LiI were mixed at a weight ratio of 30:20. The mixture was then mechanically milled by using a ball mill to prepare a Li₂S-LiI composite. The milling conditions were 25 °C and 600 rpm for 10 hours.

The Li₂S-LiI composite and carbon nanofibers (CNFs) were mixed at a weight ratio of 50:10. The mixture was mechanically milled by using a ball mill to prepare a Li₂S-LiI-CNF composite. The milling conditions were 25 °C and 600 rpm for 10 hours.

The Li₂S-LiI-CNF composite was used as a composite positive electrode active material.

### (Preparation of positive electrode and all-solid-state secondary battery)

### Example 1: Positive electrode active material layer/interlayer (LiFePO₄:Li₆PS₅Cl:binder = 90:5:5; 3 µm)/Al

### (Preparation of positive electrode)

The Li₂S-LiI-CNF composite prepared in Preparation Example 1 was prepared as a dry positive electrode active material. Li₆PS₅Cl (D50 = 1.0 µm, crystalline), an argyrodite-type crystal, was prepared as a dry second sulfide-based solid electrolyte. PTFE was prepared as a dry binder. The dry positive electrode active material and the dry solid electrolyte were prepared at a weight ratio of 60:39, added to a blade mixer, and then mixed for 2 minutes to prepare a first mixture.

The first mixture and the dry binder were prepared at a weight ratio of 99:1, added to a blade mixer, and then mixed for 20 seconds to prepare a second mixture.

The second mixture was further mixed by using a kneader, and then passed between calender rolls to prepare a dry positive electrode sheet as a self-standing film having a thickness of about 100 µm.

A mixture in which LiFePO₄ (D50 = 1 µm) as an oxide-based positive electrode active material, an argyrodite-type crystal, Li₆PS₅Cl (D50 = 0.5 µm, crystalline), as a first sulfide-based solid electrolyte, and an acrylic binder were mixed at a weight ratio of 90:5:5 was stirred while adding octyl acetate thereto, thereby preparing a slurry.

The prepared slurry was applied onto an aluminum current collector by bar coating, dried at room temperature, and then dried one more time under vacuum at 120 °C to introduce an interlayer.

The positive electrode sheet as a self-standing film was placed on the interlayer of the positive electrode current collector having an interlayer/aluminum foil structure, and then plate-pressed at a constant pressure for 10 minutes to manufacture a positive electrode.

The thickness of the positive electrode was about 120 µm. The thickness of the positive electrode active material layer was about100 µm, the thickness of the interlayer was about 3 µm, and the thickness of the aluminum foil was about 17 µm.

The area of the positive electrode active material layer was equal to the area of the positive electrode current collector.

### (Manufacture of negative electrode)

A 10 µm-thick SUS foil was prepared as a negative electrode current collector. As a negative electrode material, carbon black (CB) with a primary particle diameter of about 30 nm and silver (Ag) particles with an average particle diameter of about 60 nm were prepared.

4 g of mixed powder prepared by mixing CB and Ag particles at a weight ratio of 3:1 was added into a container, and 4 g of an NMP solution containing 7 wt% of PVDF binder (Kureha #9300) was added thereto to prepare a mixed solution. A slurry was prepared by gradually adding the NMP to the prepared mixed solution while stirring. The prepared slurry was applied onto a SUS sheet by using a bar coater, dried in air at 80 °C for 10 minutes, and then vacuum-dried at 40 °C for 10 hours to prepare a laminate. The prepared laminate was cold-roll-pressed to planarize the surface, thereby preparing a negative electrode having a first negative electrode active material layer/negative electrode current collector structure. The thickness of the first negative electrode active material layer was about 15 µm. The area of the first negative electrode active material layer was equal to the area of the negative electrode current collector.

### (Preparation of solid electrolyte layer)

An argyrodite-type crystal, Li₆PS₅Cl solid electrolyte (D50=3.0 µm, crystalline), was mixed with 1.5 parts by weight of an acrylic binder relative to 98.5 parts by weight of the solid electrolyte to prepare a mixture. A slurry was prepared by stirring the prepared mixture while adding octyl acetate thereto. The prepared slurry was applied onto a 15 µm-thick non-woven fabric placed on a 75 µm-thick PET substrate by using a bar coater, and then dried in air at 80 °C for 10 minutes to prepare a laminate. The prepared laminate was vacuum-dried at 80 °C for 2 hours to prepare a solid electrolyte layer.

### (Inert member)

A slurry prepared by mixing pulp fiber (e.g., cellulose fiber), glass fiber, aluminum hydroxide (Al(OH)₃), an acrylic binder, and a solvent was molded into a gasket form, and the solvent was removed therefrom, thereby preparing a flame-retardant inert member.

The weight ratio of the pulp fiber (e.g., cellulose fiber), the glass fiber, Al(OH)₃, and the acrylic binder was 20:8:70:2. The thickness of the inert member was 120 µm.

Before arranging the prepared flame-retardant inert member on the solid electrolyte layer, the flame-retardant inert member was vacuum heat-treated at 80 °C for 5 hours to remove moisture and the like from the flame-retardant inert member.

### (Preparation of all-solid-state secondary battery)

Referring to FIG. 4, a solid electrolyte layer was arranged on a negative electrode such that the first negative electrode active material layer was in contact with the solid electrolyte layer, and then a positive electrode was arranged on the solid electrolyte layer. A laminate was prepared by arranging a gasket around the positive electrode so as to surround the positive electrode and be in contact with the solid electrolyte layer. The thickness of the gasket was about 120 µm. Here, the flame-retardant inert member was used as the gasket. The gasket was arranged to be in contact with a side surface of the positive electrode and with the solid electrolyte layer. The positive electrode was arranged at the center of the solid electrolyte layer, and the gasket was arranged such that it surrounded the positive electrode and extended to the terminal ends of the solid electrolyte layer. The area of the positive electrode was about 90 % of the area of the solid electrolyte layer, and the gasket was arranged over the entire remaining 10 % of the area of the solid electrolyte layer where the positive electrode was not arranged.

The prepared laminate was treated plate-pressed at 85 °C under a pressure of 500 MPa for 30 minutes. By this pressing, the solid electrolyte layer was sintered, thereby improving the battery characteristics. The thickness of the sintered solid electrolyte layer was about 45 µm. The density of the Li₆PS₅Cl solid electrolyte, which is an argyrodite-type crystal, included in the sintered solid electrolyte layer was 1.6 g/cc. The area of the solid electrolyte layer was equal to the area of the negative electrode.

The pressed laminate was placed in a pouch and vacuum-sealed to manufacture an all-solid-state secondary battery. A portion of the positive electrode current collector and a portion of the negative electrode current collector were extended to the outside of the sealed battery to serve as a positive electrode terminal and a negative electrode terminal, respectively.

### Example 2: Positive electrode active material layer/interlayer (LiFePO₄:Li₆PS₅Cl:binder=95:3:2; 3 µm)/Al

A positive electrode and an all-solid-state secondary battery were manufactured in the same manner as in Example 1, except that the weight ratio of LiFePO₄, Li₆PS₅Cl, and the acrylic binder was changed to 95:3:2 during the preparation of the interlayer.

### Example 3: Positive electrode active material layer/interlayer (LiFePO₄:Li₆PS₅Cl:binder=98:1:1; 3 µm)/Al

A positive electrode and an all-solid-state secondary battery were manufactured in the same manner as in Example 1, except that the weight ratio of LiFePO₄, Li₆PS₅Cl, and the acrylic binder was changed to 98:1:1 during the preparation of the interlayer.

### Example 4: Positive electrode active material layer/interlayer (LiFePO₄:Li₆PS₅Cl:binder=80:15:5; 3 µm)/Al

A positive electrode and an all-solid-state secondary battery were manufactured in the same manner as in Example 1, except that the weight ratio of LiFePO₄, Li₆PS₅Cl, and the acrylic binder was changed to 80:15:5 during the preparation of the interlayer.

### Example 5: Positive electrode active material layer/interlayer (LiFePO₄:Li₆PS₅Cl:binder=90:5:5; 3 µm)/carbon layer (2 µm)/Al

A positive electrode and an all-solid-state secondary battery were manufactured in the same manner as in Example 1, except that a carbon layer-coated aluminum foil was used as the positive electrode current collector during introduction of the interlayer.

The positive electrode had a positive electrode active material layer/interlayer/carbon layer/aluminum foil structure. The thickness of the interlayer was about 3 µm. The thickness of the carbon layer was about 2 µm. The thickness of the positive electrode active material layer was about 100 µm. The thickness of the positive electrode was about 122 µm.

### Reference Example 1: Positive electrode active material layer/interlayer (LiFePO₄:Li₆PS₅Cl:binder=99:0:1; 3 µm)/Al

A positive electrode and an all-solid-state secondary battery were manufactured in the same manner as in Example 1, except that the weight ratio of LiFePO₄, Li₆PS₅Cl, and the acrylic binder was changed to 99:0:1 during the preparation of the interlayer.

Here, the sulfide-based solid electrolyte was not used.

### Comparative Example 1: Positive electrode active material layer/Al

A positive electrode and an all-solid-state secondary battery were manufactured in the same manner as in Example 1, except that the interlayer was not introduced.

The positive electrode had a positive electrode active material layer/aluminum foil structure. The thickness of the positive electrode active material layer was about 100 µm. The thickness of the positive electrode was about 117 µm.

### Comparative Example 2: Positive electrode active material layer/carbon Layer (2 µm)/Al

A positive electrode and an all-solid-state secondary battery were manufactured in the same manner as in Example 1, except that the interlayer was not introduced and a carbon coating layer-coated aluminum foil was used as the positive electrode current collector.

The positive electrode had a positive electrode active material layer/carbon layer/aluminum foil structure. The thickness of the carbon layer was about 2 µm. The thickness of the positive electrode active material layer was about 100 µm. The thickness of the positive electrode was about 119 µm.

### Example 6: Positive electrode active material layer/interlayer (LiMn₂O₄:Li₆PS₅Cl:binder=90:5:5; 3 µm)/Al

A positive electrode and an all-solid-state secondary battery were manufactured in the same manner as in Example 1, except that LiMn₂O₄ was used instead of LiFePO₄ as the positive electrode active material.

### Example 7: Positive electrode active material layer/interlayer (LiMn₂O₄:Li₆PS₅Cl:binder=95:3:2; 3 µm)/Al

A positive electrode and an all-solid-state secondary battery were manufactured in the same manner as in Example 2, except that LiMn₂O₄ was used instead of LiFePO₄ as the positive electrode active material.

### Example 8: Positive electrode active material layer/interlayer (LiMn₂O₄:Li₆PS₅Cl:binder=98:1:1; 3 µm)/Al

A positive electrode and an all-solid-state secondary battery were manufactured in the same manner as in Example 3, except that LiMn₂O₄ was used instead of LiFePO₄ as the positive electrode active material.

### Example 9: Positive electrode active material layer/interlayer (LiMn₂O₄:Li₆PS₅Cl:binder=80:15:5; 3 µm)/Al

A positive electrode and an all-solid-state secondary battery were manufactured in the same manner as in Example 5, except that LiMn₂O₄ was used instead of LiFePO₄ as the positive electrode active material.

### Example 10: Positive electrode active material layer/interlayer (LiMn₂O₄:Li₆PS₅Cl:binder=90:5:5; 3 µm)/carbon layer (2 µm)/Al

A positive electrode and an all-solid-state secondary battery were manufactured in the same manner as in Example 6, except that LiMn₂O₄ was used instead of LiFePO₄ as the positive electrode active material.

### Reference Example 2: Positive electrode active material layer/interlayer (LiMn₂O₄:Li₆PS₅Cl:binder=99:0:1; 3 µm)/Al

A positive electrode and an all-solid-state secondary battery were manufactured in the same manner as in Reference Example 1, except that LiMn₂O₄ was used instead of LiFePO₄ as the positive electrode active material.

Here, the sulfide-based solid electrolyte was not used.

### Evaluation Example 1: XRD analysis and SEM analysis

XRD spectra were measured by using Cu Kα radiation for bare Li₂S used in Preparation Example 1, pulverized Li₂S, the Li₂S-LiI composite prepared first in Preparation Example 1, and the Li₂S-LiI-CNF composite prepared in Preparation Example 1.

Some of the measurement results are shown in Table 1 and FIG. 1. From the first peak corresponding to the (111) crystal plane appearing at a diffraction angle of 2θ = 27° ± 2.0° in the XRD spectrum, the Li₂S crystallite size and the lattice constant were derived.

The pulverized Li₂S was prepared by milling under the same conditions as in Preparation Example 1, except that the weight ratio (30:20) of Li₂S and LiI was changed to 50 parts by weight of Li₂S alone.

The particle size (i.e., D50 particle size and D10 particle size) of the composite was measured by using a laser-based PSA for the bare Li₂S used in Preparation Example 1, the pulverized Li₂S, and the Li₂S-LiI-CNF composite prepared in Preparation Example 1.

SEM images of the bare Li₂S used in Example 1 and the Li₂S-LiI-CNF composite prepared in Example 1 are shown in FIGS. 2A and 2B, respectively.

The Li₂S particle size of the composite was measured by using an SEM. The measurement results are shown in Table 1.

**Table 1**

| | Li₂S crystallite size [nm] | Li₂S particle size [µm] |
|---|---|---|
| Bare Li₂S | 65 | 8 |
| Pulverized Li₂S | 15 | - |
| Li₂S-LiI-CNF composite | Less than 10 | Less than 1 |

As shown in Table 1, the Li₂S particle size and crystallite size of the Li₂S-LiI-CNF composite were significantly reduced compared to the bare Li₂S.

Although not shown in Table 1, the lattice constant of the Li₂S-LiI-CNF composite of Preparation Example 1 was larger than that of the bare Li₂S. The increase in the lattice constant of the Li₂S-LiI composite compared to that of the bare Li₂S was determined to be due to the dissolution of LiI within the Li₂S crystals. Therefore, it was confirmed that the Li₂S-LiI composite formed a solid solution in the Li₂S-LiI-CNF composite.

The composite prepared in Preparation Example 1 had a D50 particle size of about 5 µm and a D10 particle size of about 1 µm or more.

### Evaluation Example 2: Charge/discharge test

The charge/discharge characteristics of the all-solid-state secondary batteries prepared in Examples 1 to 10, Reference Examples 1 and 2, and Comparative Examples 1 and 2 were evaluated by the following charge/discharge test. The charge/discharge test was performed by placing the all-solid-state secondary batteries in a thermostatic chamber at 45 °C.

In the first cycle, charging was performed at a constant current of 0.1 C for 20 hours until the battery voltage reached 2.5 V. Subsequently, discharging was performed at a constant current of 0.05 C for 20 hours until the battery voltage reached 0.3 V.

The discharge capacity of the first cycle was set as the standard capacity. The standard capacity is expressed as the specific capacity of the composite positive electrode active material in Table 2.

From the second cycle and beyond, charging and discharging were performed under the same conditions as the first cycle for up to 500 cycles. Some of the evaluation results are shown in Table 2.

The number of cycles refers to the number of cycles required for the discharge capacity to decrease to 80 % of the standard capacity after the second cycle. As the number of cycles increased, it was considered that the batteries had excellent lifespan characteristics.

The initial efficiency is expressed by Equation 1: 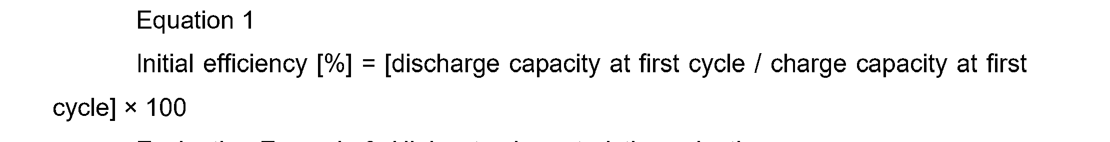 Initial efficiency [%] = [discharge capacity at first cycle / charge capacity at first cycle] × 100 Equation 1

### Evaluation Example 3: High-rate characteristic evaluation

The high-rate characteristics of the all-solid-state secondary batteries of Examples 1 to 10, Reference Examples 1 and 2, and Comparative Examples 1 and 2 were evaluated by the following charge/discharge test. The charge/discharge test was performed by placing the all-solid-state secondary batteries in a thermostatic chamber at 45 °C.

The all-solid-state secondary batteries of Examples 1 to 10, Reference Examples 1 and 2, and Comparative Examples 1 and 2 were charged at 45 °C with a constant current at a rate of 0.1 C until the voltage reached 2.5 V (vs. Li), and then cut-off at a current of 0.05 C rate while maintaining 2.5 V in a constant voltage mode. Subsequently, the batteries were discharged at a constant current of 0.1 C rate until the voltage reached 0.3 V (vs. Li) during discharge (formation cycle).

The all-solid-state secondary batteries that had undergone the formation cycle were charged at 45 °C with a constant current at a rate of 0.2 C until the voltage reached 2.5 V (vs. Li). Subsequently, the batteries were discharged at a constant current of 0.2 C rate until the voltage reached 0.3 V (vs. Li) during discharge (first cycle).

The all-solid-state secondary batteries that had undergone the first cycle were charged at 45 °C with a constant current at a rate of 0.2 C until the voltage reached 2.5 V (vs. Li). Subsequently, the batteries were discharged at a constant current of 0.3 C rate until the voltage reached 0.3 V (vs. Li) during discharge (second cycle).

The all-solid-state secondary batteries that had undergone the second cycle were charged at 45 °C with a constant current at a rate of 0.2 C until the voltage reached 2.5 V (vs. Li). Subsequently, the batteries were discharged at a constant current of 0.5 C rate until the voltage reached 0.3 V (vs. Li) during discharge (third cycle).

The all-solid-state secondary batteries that had undergone the third cycle were charged at 45 °C with a constant current at a rate of 0.2 C until the voltage reached 2.5 V (vs. Li). Subsequently, the batteries were discharged at a constant current of 1.0 C rate until the voltage reached 0.3 V (vs. Li) during discharge (4th cycle).

In all charge/discharge cycles, a 10-minute rest period was applied after each charge/discharge cycle. Some of the evaluation results are shown in Table 2 below. The high-rate characteristic is defined by Equation 2 below. 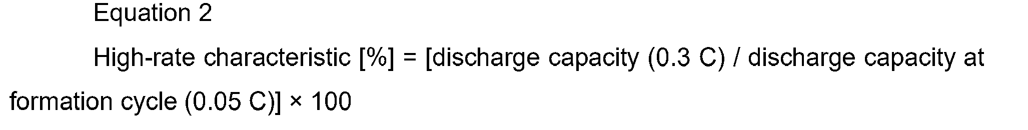 High-rate characteristic [%] = [discharge capacity (0.3 C) / discharge capacity at formation cycle (0.05 C)] × 100 Equation 2

**[Table 2]**

| | Initial efficiency [%] | Specific capacity [mAh/g] | Number of cycles [times] | High-rate characte ristic [%] |
|---|---|---|---|---|
| Example 1: Positive electrode active material layer/interlayer (LiFePO₄:Li₆PS₅Cl:binder=90:5:5 ;3 µm)/Al | 84.6 | 851 | 252 | 93.5 |
| Example 2: Positive electrode active material layer/interlayer (LiFePO₄:Li₆PS₅Cl:binder=95:3:2 ;3 µm)/Al | 84.5 | 821 | 223 | 91.5 |
| Example 3: Positive electrode active material layer/interlayer (LiFePO₄:Li₆PS₅Cl:binder=98:1:1 ;3 µm)/Al | 80.6 | 799 | 132 | 85.6 |
| Example 4: Positive electrode active material layer/interlayer (LiFePO₄:Li₆PS₅Cl:binder=80:15: 5;3 µm)/Al | 83.6 | 832 | 248 | 95.6 |
| Example 5: Positive electrode active material layer/Interlayer (LiFePO₄:Li₆PS₅Cl:binder=90:5:5 ;3 µm)/Carbon layer (2 µm)/Al | 88.5 | 920 | 498 | 96.2 |
| Reference Example 1: Positive electrode active material layer/Interlayer (LiFePO₄:Li₆PS₅Cl:binder=99:0:1 ;3µm)/Al | 56.5 | 712 | 56 | 72.2 |
| Comparative Example 1: Positive electrode active material layer/Al | 72.6 | 709 | 15 | 80.5 |
| Comparative Example 2: Positive electrode active material layer/carbon layer (2 µm)/Al | 78.8 | 801 | 120 | 91.9 |

As shown in Table 2, the all-solid-state secondary batteries of Examples 1 to 5 exhibited improved charge/discharge characteristics compared to the all-solid-state secondary batteries of Comparative Examples 1 and 2.

The all-solid-state secondary batteries of Examples 1 to 5 showed improved charge/discharge characteristics due to increased adhesion between the positive electrode current collector and the positive electrode active material layer and reduced interfacial resistance by introducing the interlayer.

The all-solid-state secondary battery of Reference Example 1 exhibited poor charge/discharge characteristics due to increased interfacial resistance resulting from the introduction of the interlayer that does not contain the solid electrolyte.

The all-solid-state secondary battery of Comparative Example 1 exhibited poor charge/discharge characteristics due to high interfacial resistance between the dry positive electrode film constituting the positive electrode active material layer and the positive electrode current collector.

The all-solid-state secondary battery of Comparative Example 2 showed improved charge/discharge characteristics compared to the all-solid-state secondary battery of Comparative Example 1 by introducing the carbon layer.

Although not shown in Table 2, the all-solid-state secondary batteries of Examples 6 to 10 also exhibited improved charge/discharge characteristics compared to the all-solid-state secondary batteries of Reference Example 2 and Comparative Examples 1 and 2.

Although not shown in the drawings, it was confirmed that a lithium metal layer, which is a second negative electrode active material layer, was formed between the first negative electrode active material layer and the negative electrode current collector after the initial charging in the all-solid-state secondary batteries of Examples 1 to 10.

The formation of the lithium metal layer was confirmed through cross-sectional SEM images of the all-solid-state secondary batteries.

### Evaluation Example 4: Thermal stability evaluation

The penetration test was performed on the all-solid-state secondary batteries prepared in Examples 1 to 10, Reference Examples 1 and 2, and Comparative Examples 1 and 2.

The penetration test was performed by charging the all-solid-state secondary batteries to 2.5 V at 0.5 C for 2 hours, followed by resting for about 10 minutes, and then completely penetrating the center of the all-solid-state secondary batteries at a speed of 60 mm/sec by using a pin with a diameter of 5 mm. Based on whether ignition occurred after the penetration, all-solid-state secondary batteries that did not ignite were marked ○, and those that ignited were marked ×. Some of the evaluation results are shown in Table 3.

The temperature changes of the all-solid-state secondary batteries were measured for 48 hours after the penetration to determine the maximum exothermic temperature.

**[Table 3]**

| | Thermal stability |
|---|---|
| Example 1: Positive electrode active material layer/interlayer (LiFePO₄:Li₆PS₅Cl:binder = 90:5:5; 3 µm)/Al | ○ |
| Example 2: Positive electrode active material layer/interlayer (LiFePO₄:Li₆PS₅Cl:binder = 95:3:2; 3 µm)/Al | ○ |
| Example 3: Positive electrode active material layer/interlayer (LiFePO₄:Li₆PS₅Cl:binder = 98:1:1; 3 µm)/Al | ○ |
| Example 4: Positive electrode active material layer/interlayer (LiFePO₄:Li₆PS₅Cl:binder = 80:15:5; 3 µm)/Al | ○ |
| Example 5: Positive electrode active material layer/interlayer (LiFePO₄:Li₆PS₅Cl:binder = 90:5:5; 3 µm)/carbon layer (2 µm)/Al | ○ |
| Reference Example 1: Positive electrode active material layer/interlayer (LiFePO₄:Li₆PS₅Cl:binder = 95:0:5; 3 µm)/Al | ○ |
| Comparative Example 1: Positive electrode active material layer/Al | × |
| Comparative Example 2: Positive electrode active material layer/carbon layer (2 µm)/Al | × |

As shown in Table 3, the all-solid-state secondary batteries of Examples 1 to 5 and Reference Example 1 exhibited improved thermal stability compared to the all-solid-state secondary batteries of Comparative Examples 1 and 2.

In the all-solid-state secondary batteries of Examples 1 to 5 and Reference Example 1, the thermal stability was improved by the introduction of the interlayer.

Although not shown in Table 3, the relative heights of the maximum exothermic temperatures of the all-solid-state secondary batteries of Examples 1 to 5, Reference Example 1, and Comparative Examples 1 and 2 were as follows: Comparative Example 1 ≒ Comparative Example 2 >> Example 5 > Examples 1 to 3, Reference Example 1, and Example 6

The all-solid-state secondary batteries of Comparative Examples 1 and 2, by not including an interlayer, exhibited a significantly increased maximum exothermic temperature compared to the all-solid-state secondary batteries of Examples 1 to 5 and Reference Example 1.

The all-solid-state secondary battery of Example 5 exhibited a relatively increased maximum exothermic temperature compared to the all-solid-state secondary batteries of Examples 1 to 3, Reference Example 1, and Example 6, due to the relatively reduced content of the oxide-based positive electrode active material.

Although not shown in Table 3, compared to the all-solid-state secondary batteries of Comparative Examples 1 and 2, the all-solid-state secondary batteries of Examples 6 to 10 and Reference Example 2 exhibited improved thermal stability and also showed the relative heights of maximum exothermic temperature at equivalent levels.

### [Description of Reference Numerals]

1 All-solid-state secondary battery 10 Positive electrode
11 Positive electrode current collector 12 Positive electrode active material layer
13 Interlayer 20 Negative electrode
21 Negative electrode current collector 22 First negative electrode active material layer
23 Thin film 24 Second negative electrode active material layer
30 Electrolyte layer 40 First inert member
50 Second inert member

### Industrial Applicability

According to one aspect, it is possible to provide a positive electrode and an all-solid-state secondary battery that have improved charge/discharge characteristics and thermal stability at the same time by introducing an interlayer, which includes an oxide-based positive electrode active material, between a positive electrode current collector and a positive electrode active material layer including a sulfide-based positive electrode active material.

## Claims

1. A positive electrode comprising:
a positive electrode current collector; a positive electrode active material layer; and
an interlayer between the positive electrode current collector and the positive electrode active material layer,
wherein the interlayer comprises an oxide-based positive electrode active material and a first sulfide-based solid electrolyte,
the positive electrode active material layer comprises a sulfide-based composite positive electrode active material and a second sulfide-based solid electrolyte,
the composite positive electrode active material comprises a composite of Li₂S, a first ionic compound, and a first carbon-based material, and
the oxide-based positive electrode active material has an olivine structure or a spinel structure.

2. The positive electrode of claim 1, wherein the oxide-based positive electrode active material comprises a lithium transition metal oxide represented by Formulae 1 to 4:
Formula 1 LiₐM1ₓM2_{y}PO_{4-b}X_{b}
wherein, in Formula 1, 0.90≤a≤1.1, 0≤x≤0.9, 0≤y≤0.5, 0.9<x+y<1.1, and 0≤b≤2,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, X is O, F, S, P, or a combination thereof,
Formula 2 LiₐM3_{z}PO₄
wherein, in Formula 2, 0.90≤a≤1.1 and 0.9≤z≤1.1,
M3 is chromium (Cr), manganese (Mn), iron (Fe), cobalt (Co), nickel (Ni), copper (Cu), zirconium (Zr), or a combination thereof,
Formula 3 LiₐMn₂₋ₓM4ₓO_{4-b}X_{b}
Formula 4 LiₐCo₂₋ₓM5ₓO_{4-b}X_{b}
wherein, in Formulae 3 and 4, 0.90≤a≤1.1, 0≤x≤0.9, and 0≤b≤2, and
M4 and M5 are each independently magnesium (Mg), calcium (Ca), strontium (Sr), barium (Ba), titanium (Ti), zirconium (Zr), niobium (Nb), molybdenum (Mo), tungsten (W), aluminum (Al), silicon (Si), nickel (Ni), manganese (Mn), chromium (Cr), iron (Fe), magnesium (Mg), scandium (Sc), vanadium (V), scandium (Sc), yttrium (Y), or a combination thereof, and
X is O, F, S, P, or a combination thereof.

3. The positive electrode of claim 1, wherein a content of the oxide-based positive electrode active material is 80 wt% or more of a total weight of the interlayer.

4. The positive electrode of claim 1, wherein the first sulfide-based solid electrolyte and the second sulfide-based solid electrolyte are each independently at least one selected from Li₂S-P₂S₅, Li₂S-P₂S₅-LiX where X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n are positive numbers and Z is one of Ge, Zn, or Ga, Li₂S-GeS₂, Li₂S-SiS₂-Li₃PO₄, Li₂S-SiS₂-LiₚMO_{q} where p and q are positive numbers and M is one of P, Si, Ge, B, Al, Ga, or In, Li₇₋ₓPS₆₋ₓClₓ where 0≤x≤2, Li₇₋ₓPS₆₋ₓBrₓ where 0≤x≤2, and Li₇₋ₓPS₆₋ₓIₓ where 0≤x≤2,
the first sulfide-based solid electrolyte, the second sulfide-based solid electrolyte, or a combination thereof comprises an argyrodite-type solid electrolyte, and
the argyrodite-type solid electrolyte comprises at least one selected from Li₆PS₅Cl, Li₆PS₅Br, and Li₆PS₅I, and
the argyrodite-type solid electrolyte has a density of 1.5 to 2.0 g/cc.

5. The positive electrode of claim 1, wherein a size of the first sulfide-based solid electrolyte is smaller than a size of the second sulfide-based solid electrolyte, and
the size of the first sulfide-based solid electrolyte is 90 % or less of the size of the second sulfide-based solid electrolyte.

6. The positive electrode of claim 1, wherein a thickness of the interlayer is smaller than a thickness of the positive electrode active material layer,
a thickness of the interlayer is 20 % or less of the thickness of the positive electrode active material layer, and
the thickness of the interlayer is 10 µm or less.

7. The positive electrode of claim 1, wherein the interlayer further comprises
a binder, and
the interlayer comprises 80 to 99 parts by weight of the oxide-based positive electrode active material, 1 to 10 parts by weight of the first sulfide-based solid electrolyte, and 1 to 10 parts by weight of the binder, based on 100 parts by weight of the interlayer.

8. The positive electrode of claim 1, further comprising a carbon layer between the positive electrode current collector and the interlayer,
wherein a thickness of the carbon layer is smaller than a thickness of the interlayer, and
the thickness of the carbon layer is 5 µm or less.

9. The positive electrode of claim 1, wherein the composite of Li₂S, the first ionic compound, and the first carbon-based material comprises
a composite represented by Li₂S-LiₐX_{b}-C (1≤a≤5 and 1≤b≤5), a composite represented by Li₂S-M1ₐX_{b}-C (1≤a≤5 and 1≤b≤5), a composite represented by Li₂S-M1ₐS_{b}-C (1≤a≤5 and 1≤b≤5), or a combination thereof,
wherein M1 is Mg, Ca, Sr, Ba, Al, Ga, In, V, Nb, Sc, Fe, Ru, Os, or a combination thereof, and
X is I, Br, Cl, F, H, O, Se, Te, N, P, As, Sb, Al, B, OCl, PF₆, BF₄, SbF₆, AsF₆, ClO₄, AlO₂, AlCl₄, NO₃, CO₃, BH₄, SO₄, BO₃, PO₄, NCl, NCl₂, BN₂, or a combination thereof.

10. The positive electrode of claim 9, wherein the first ionic compound comprises a first lithium salt, a first metal salt, a first metal sulfide, or a combination thereof,
the first lithium salt is a binary compound or a ternary compound,
the binary compound comprises LiI, LiBr, LiCl, LiF, LiH, Li₂O, Li₂Se, Li₂Te, Li₃N, Li₃P, Li₃As, Li₃Sb, Li₃Al₂, LiB₃, or a combination thereof,
the ternary compound comprises Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof,
the first metal salt comprises AlF₃, AlCl₃, AlBr₃, CaF₂, CaCl₂, CaBr₂, or a combination thereof, and
the first metal sulfide comprises FeS, MgS, CaS, Al₂S₃, V₂S₃, FeS₂, VS₂, MnS, NiS, CuS, or a combination thereof.

11. The positive electrode of claim 9, wherein the composite of Li₂S, the first ionic compound, and the first carbon-based material comprises a solid solution of Li₂S and the first ionic compound, and
a size of Li₂S crystallites obtained from an X-ray diffraction (XRD) spectrum of the composite of Li₂S, the first ionic compound, and the first carbon-based material is 20 nm or less.

12. The positive electrode of claim 9, wherein a molar ratio of Li₂S to the first ionic compound in the composite of Li₂S, the first ionic compound, and the first carbon-based material is 50:50 to 95:5,
the composite of Li₂S, the first ionic compound, and the first carbon-based material comprises 10 to 80 parts by weight of Li₂S, 1 to 40 parts by weight of the first ionic compound, and 1 to 20 parts by weight of the first carbon-based material, based on 100 parts by weight of the composite of Li₂S, the first ionic compound, and the first carbon-based material,
a size of the composite of Li₂S, the first ionic compound, and the first carbon-based material is 1 to 20 µm, and a D10 particle diameter of the composite of Li₂S, the first ionic compound, and the first carbon-based material is 1 µm or more.

13. The positive electrode of claim 9, wherein the first carbon-based material comprises amorphous carbon, crystalline carbon, or a combination thereof, the first carbon-based material comprises a carbon nanostructure, wherein the carbon nanostructure comprises carbon nanofibers, carbon nanotubes, carbon nanobelts, carbon nanorods, graphene, or a combination thereof, and
the first carbon-based material comprises a fibrous carbon-based material, a particulate carbon-based material, or a combination thereof,
wherein the particulate carbon-based material comprises carbon black, Ketjen black, acetylene black, Denka black, thermal black, channel black, graphite, activated carbon, or a combination thereof.

14. The positive electrode of claim 1, wherein the positive electrode active material layer comprises a dry positive electrode active material layer,
the dry positive electrode active material layer comprises a dry composite positive electrode active material and a dry second sulfide-based solid electrolyte,
the dry positive electrode active material layer further comprises a dry binder, wherein the dry binder comprises a fluorine-based binder, and
the dry positive electrode active material layer comprises a dry positive electrode film, wherein the dry positive electrode film is a self-standing film.

15. The positive electrode of claim 1, wherein the positive electrode current collector comprises a base film and a metal layer arranged on one or both sides of the base film,
the base film comprises a polymer, wherein the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

16. An all-solid-state secondary battery comprising:
the positive electrode according to any one of claims 1 to 15; a negative electrode; and
an electrolyte layer arranged between the positive electrode and the negative electrode,
wherein the negative electrode comprises a negative electrode current collector and a first negative electrode active material layer arranged on one side of the negative electrode current collector.

17. The all-solid-state secondary battery of claim 16, wherein the first negative electrode active material layer comprises a negative electrode active material and a binder,
the negative electrode active material has a particle form, and an average particle diameter of the negative electrode active material is 4 µm or less.

18. The all-solid-state secondary battery of claim 16, wherein the negative electrode active material comprises at least one selected from a carbon-based negative electrode active material and a metal- or metalloid-negative electrode active material,
the carbon-based negative electrode active material comprises amorphous carbon, crystalline carbon, porous carbon, or a combination thereof,
the metal- or metalloid- negative electrode active material comprises gold (Au), platinum (Pt), palladium (Pd), silicon (Si), silver (Ag), aluminum (Al), bismuth (Bi), tin (Sn), zinc (Zn), or a combination thereof,
the negative electrode active material comprises a mixture of first particles composed of amorphous carbon and second particles composed of a metal or metalloid, and
a content of the second particles is 1 to 60 wt% based on the total weight of the mixture.

19. The all-solid-state secondary battery of claim 16, further comprising a second negative electrode active material layer,
wherein the second negative electrode active material layer is arranged in at least one of between the negative electrode current collector and the first negative electrode active material layer and between the negative electrode current collector and the electrolyte layer, and
the second negative electrode active material layer is a metal layer, wherein the metal layer comprises lithium or a lithium alloy.

20. The all-solid-state secondary battery of claim 16, wherein the electrolyte layer further comprises a solid electrolyte, a gel electrolyte, or a combination thereof,
the solid electrolyte comprises a sulfide-based solid electrolyte, an oxide-based solid electrolyte, a polymer solid electrolyte, or a combination thereof, and
the gel electrolyte comprises a polymer gel electrolyte.
